(19) Europäisches Patentamt
European Patent Office
Office européen des brevets

(11) **EP 4 770 194 A1**

(12) **EUROPEAN PATENT APPLICATION**
published in accordance with Art. 153(4) EPC

(43) Date of publication:
**01.07.2026 Bulletin 2026/27**

(21) Application number: **24870466.0**

(22) Date of filing: **12.09.2024**

(51) International Patent Classification (IPC):
**H04W 36/00** (2009.01)

(52) Cooperative Patent Classification (CPC):
**H04W 36/00; H04W 36/08; H04W 52/02;**
**Y02D 30/70**

(86) International application number:
**PCT/CN2024/118553**

(87) International publication number:
**WO 2025/066922 (03.04.2025 Gazette 2025/14)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **25.09.2023 CN 202311249104**

(71) Applicant: HUAWEI TECHNOLOGIES CO., LTD.
**Shenzhen, Guangdong 518129 (CN)**

(72) Inventors:
• ZHANG, Shuhang
  Shenzhen, Guangdong 518129 (CN)
• GUAN, Lei
  Shenzhen, Guangdong 518129 (CN)
• LI, Ruijie
  Shenzhen, Guangdong 518129 (CN)

(74) Representative: **Goddar, Heinz J.**
**Boehmert & Boehmert**
**Anwaltspartnerschaft mbB**
**Pettenkoferstrasse 22**
**80336 München (DE)**

(54) **COMMUNICATION METHOD AND APPARATUS**

(57) A communication method and apparatus are provided, and relate to the field of wireless communication technologies, to implement network energy saving. The method includes: A network device receives an uplink wake-up signal in a first cell from a terminal, where the terminal is a terminal in an idle state or an inactive state; and the network device determines, based on the uplink wake-up signal, whether the terminal satisfies a cell reselection condition, and if determining that the terminal satisfies the cell reselection condition, the network device sends downlink indication information in the first cell, where the downlink indication information indicates the terminal to perform cell reselection.

FIG. 3

**Description**

[0001] This application claims priority to Chinese Patent Application No. 202311249104.1, filed with the China National Intellectual Property Administration on September 25, 2023 and entitled "COMMUNICATION METHOD AND APPARATUS", which is incorporated herein by reference in its entirety.

TECHNICAL FIELD

Embodiments of this application relate to the field of wireless communication technologies, and in particular, to a communication method and apparatus.

BACKGROUND

Cell reselection (cell reselection) is a cell selection mechanism for a terminal in an idle (idle) state and a terminal in an inactive (inactive) state. After camping on a cell, the terminal in the idle/inactive state periodically measures downlink reference signals in a serving cell and a neighboring cell. When strength of the downlink reference signal in the serving cell is lower than a threshold, the terminal may select a cell with a higher priority or better signal quality as the serving cell.

Currently, in a cell reselection process, a network side needs to send downlink reference signals in a plurality of cells, for the idle/inactive terminal to measure the downlink reference signals in the plurality of cells. This is not conducive to network energy saving.

SUMMARY

Embodiments of this application provide a communication method and apparatus, to implement network energy saving.

According to a first aspect, a communication method is provided. The method may be applied to a network device, may be applied to an apparatus (for example, a chip) located inside the network device, or may be applied to a unit or module that forms the network device and that has a corresponding function. The following uses the network device as an example for description. The method includes: The network device receives an uplink wake-up signal in a first cell from a terminal, where the terminal is a terminal in an idle state or an inactive state; the network device determines, based on the uplink wake-up signal, whether the terminal satisfies a cell reselection condition; and if determining that the terminal satisfies the cell reselection condition, the network device sends downlink indication information in the first cell, where the downlink indication information indicates the terminal to perform cell reselection.

The terminal in the idle state/inactive state may send the uplink wake-up signal, so that the network device can determine, based on measurement of the uplink wake-up signal, whether the terminal satisfies the cell reselection condition, and indicate the terminal to perform cell reselection when the terminal satisfies the cell reselection condition. In the foregoing implementation, the network device performs cell reselection decision based on the measurement of the uplink wake-up signal. Therefore, in comparison with a related technology in which the network device periodically sends a downlink reference signal for the terminal to perform measurement, network energy saving can be implemented.

In a possible implementation, the method further includes: A first downlink reference signal includes resource configuration information, and the first downlink reference signal is periodically sent. Optionally, the resource configuration information indicates a resource of a first uplink wake-up signal.

In a possible implementation, the resource configuration information is at a cell level. For example, the resource configuration information includes first configuration information, the first configuration information indicates a first resource, and the first resource is a resource used to send the uplink wake-up signal in the first cell.

In a possible implementation, the resource configuration information is at a cell group level. For example, the resource configuration information includes first configuration information, the first configuration information indicates a first resource, the first resource is a resource used to send an uplink wake-up signal in a cell in a first cell group, and the first cell group includes the first cell.

In a possible implementation, the resource configuration information includes M pieces of configuration information, the M pieces of configuration information include the first configuration information, the first configuration information indicates the first resource, the first resource is the resource used to send the uplink wake-up signal in the first cell, and M is an integer greater than 1.

Optionally, the M pieces of configuration information further include second configuration information, the second configuration information indicates a second resource, and the second resource is a resource used to send an uplink wake-up signal in a second cell. Based on the foregoing implementation, the terminal may send uplink wake-up signals in a plurality of cells, so that the network device can measure the uplink wake-up signals received in the plurality of cells to perform cell reselection decision.

In a possible implementation, the resource configuration information includes N pieces of candidate configuration information, the N pieces of candidate configuration information indicate N candidate resources used to send the uplink wake-up signal in the first cell, the N pieces of candidate configuration information are associated with K terminal identifiers, and both N and K are integers greater than or equal to 1. Correspondingly, after the receiving the uplink wake-up signal in the first cell from the terminal, the method further includes: determining the first configuration information corresponding to the resource of the uplink wake-up signal, where the first configuration information is one of the N pieces of candidate configuration information; and determining, based on a terminal identifier associated with the first configuration information, the terminal that sends the uplink wake-up signal.

In a possible implementation, the resource configuration information includes one or more of the following information: a sending periodicity of the uplink wake-up signal, a time domain offset of the uplink wake-up signal, a time domain symbol absolute position of the uplink wake-up signal, a frequency domain offset of the uplink wake-up signal, a frequency domain carrier absolute position of the uplink wake-up signal, a root sequence of the uplink wake-up signal, a zero correlation zone of a sequence of the uplink wake-up signal, target received strength of the uplink wake-up signal, a maximum quantity of power ramping times of the uplink wake-up signal, and a power ramping step of the uplink wake-up signal. The time domain offset indicates an offset of the uplink wake-up signal in time domain relative to the first downlink reference signal in time domain, and the frequency domain offset indicates an offset of the uplink wake-up signal in frequency domain relative to the first downlink reference signal in frequency domain.

In a possible implementation, the first downlink reference signal further includes an initial access signal block, or includes the initial access signal block and system information. The initial access signal block includes one or more of the following information: a synchronization signal, an SSB, and a part of information in the synchronization signal or a MIB.

In a possible implementation, the method further includes: determining that there is no terminal in a connected state in the first cell, and that no uplink wake-up signal whose signal strength exceeds a specified threshold is received on an uplink signal resource within specified duration, and stopping sending the first downlink reference signal in the first cell. The uplink signal resource includes the resource that is indicated by the resource configuration information and that is used to send the uplink wake-up signal in the first cell. In this implementation, network energy saving can be implemented.

In a possible implementation, determining that the first cell satisfies a first condition includes: determining that there is no terminal in the connected state in the first cell, and that no uplink wake-up signal whose signal strength exceeds the specified threshold is received on the uplink signal resource within the specified duration. The uplink signal resource includes the resource that is indicated by the resource configuration information and that is used to send the uplink wake-up signal in the first cell.

Optionally, the receiving the uplink wake-up signal in the first cell from the terminal includes: receiving, in the first cell, the uplink wake-up signal periodically sent by the terminal. In other words, a prerequisite of this implementation is that the terminal in the idle state or the inactive state periodically sends the uplink wake-up signal in the first cell. In this way, once the network device receives no uplink wake-up signal sent by the terminal in the idle state or the inactive state within a period of time, or even if the uplink wake-up signal is received but signal strength is weak, it may be determined that there is no longer the terminal in the idle state or the inactive state in the first cell, and the first cell may be put to sleep, to implement network energy saving.

In a possible implementation, the method further includes: if receiving, on the uplink signal resource within the specified duration, no uplink signal whose signal strength exceeds the specified threshold, sending a second downlink reference signal in the first cell. The second downlink reference signal is used to trigger a terminal in the idle state and a terminal in the inactive state that receive the second downlink reference signal to send uplink response signals in the first cell. The uplink signal resource includes the resource that is indicated by the resource configuration information and that is used to send the uplink wake-up signal in the first cell, and/or a resource used to send the uplink response signal in the first cell. The determining that the first cell satisfies the first condition includes: determining that there is no terminal in the connected state in the first cell, and that no uplink response signal whose signal strength exceeds a specified threshold is received on the resource for the uplink response signal within specified duration.

Optionally, the uplink wake-up signal is sent by the terminal when the terminal determines that signal strength of the received first downlink signal is less than a specified threshold. In other words, a prerequisite of this implementation is that the terminal in the idle state or the inactive state sends the uplink wake-up signal in the first cell only when the signal strength of the first downlink signal received by the terminal in the idle state or the inactive state in the first cell is low (which indicates that cell reselection may need to be performed), so that the network device determines, based on signal strength of the uplink wake-up signal, whether to indicate the terminal to perform cell reselection. Because the uplink wake-up signal is not unconditionally and periodically sent, the network device cannot determine, based only on the uplink wake-up signal, whether there are still the terminal in the idle state and the terminal in the inactive state in the first cell. To determine whether there are the terminal in the idle state and the terminal in the inactive state in the first cell, the network device may send the second downlink reference signal in the first cell when the network device does not receive an uplink wake-up signal and/or an uplink response signal with sufficient signal strength within a period of time, to trigger the terminal in the idle state and the terminal in the inactive state to send corresponding uplink response signals. In this way, the network device can determine, based on whether the uplink response signal with sufficient signal strength can be received, whether there are still the terminal in the idle state and the terminal in the inactive state in the first cell.

In a possible implementation, the downlink indication information includes first information, the first information indicates a format of the first configuration information, the first configuration information indicates the first resource, the first resource is the resource used to send the uplink wake-up signal in the first cell, and the first configuration information is associated with at least one terminal identifier.

In a possible implementation, the downlink indication information further includes third information, and the third information indicates a target cell.

In a possible implementation, the third information indicates one or more of the following information:

a cell identifier of the target cell;

downlink signal resource configuration information, indicating a resource used to send a downlink reference signal in the target cell, where the downlink reference signal includes resource configuration information, the resource configuration information indicates a resource used to send an uplink wake-up signal in the target cell, and the downlink reference signal is periodically sent; and

uplink signal resource configuration information, indicating the resource used to send the uplink wake-up signal in the target cell, where the uplink wake-up signal is used by the network device to determine whether the terminal satisfies the cell reselection condition after camping on the target cell.

In a possible implementation, the method further includes: if periodic sending of the downlink reference signal has been stopped in the target cell, and the target cell is a cell served by the network device, restarting to periodically send the downlink reference signal in the target cell; or if periodic sending of the downlink reference signal has been stopped in the target cell, and the target cell is a cell served by another network device, indicating the another network device to restart to periodically send the downlink reference signal in the target cell.

In a possible implementation, the method further includes: receiving, in the second cell, the uplink wake-up signal from the terminal. The determining, based on the uplink wake-up signal, whether the terminal satisfies the cell reselection condition includes: determining, based on signal strength of the uplink wake-up signal received in the first cell and signal strength of the uplink signal received in the second cell, whether the terminal satisfies the cell reselection condition.

According to a second aspect, a communication method is provided. The method may be applied to a terminal, and the method includes: sending an uplink wake-up signal in a first cell, where the uplink wake-up signal is used by a network device to determine whether the terminal satisfies a cell reselection condition, the terminal is a terminal that sends the uplink wake-up signal, and the terminal is a terminal in an idle state or an inactive state; receiving downlink indication information in the first cell, where the downlink indication information indicates the terminal to perform cell reselection; and performing cell reselection or cell reselection decision based on the downlink indication information.

In a possible implementation, before the sending the uplink wake-up signal in the first cell, the method further includes: receiving a first downlink reference signal in the first cell, where the first downlink reference signal includes resource configuration information, and the first downlink reference signal is periodically sent. The sending the uplink wake-up signal in the first cell includes: sending the uplink wake-up signal in the first cell based on the resource configuration information.

In a possible implementation, the resource configuration information includes first configuration information, the first configuration information indicates a first resource, and the first resource is a resource used to send the uplink wake-up signal in the first cell; or the resource configuration information includes first configuration information, the first configuration information indicates a first resource, the first resource is a resource used to send uplink wake-up in a cell in a first cell group, and the first cell group includes the first cell.

In a possible implementation, the resource configuration information includes M pieces of configuration information, the M pieces of configuration information include the first configuration information and second configuration information, the first configuration information indicates the first resource, the first resource is the resource used to send the uplink wake-up signal in the cell in the first cell group, the second configuration information indicates a second resource, and the second resource is a resource used to send an uplink wake-up signal in a second cell. The sending the uplink wake-up signal in the first cell includes: sending the uplink wake-up signal in the first cell based on the first configuration information. The method further includes: sending the uplink wake-up signal in the second cell based on the second configuration information.

In a possible implementation, the resource configuration information includes N pieces of candidate configuration information, the N pieces of candidate configuration information indicate N candidate resources used to send the uplink wake-up signal in the first cell, the N pieces of candidate configuration information are associated with K terminal identifiers, and both N and K are integers greater than or equal to 1. The sending the uplink wake-up signal in the first cell includes: determining, based on an identifier of the terminal, the first configuration information that is in the N pieces of candidate configuration information and that is associated with the identifier of the terminal; and sending the uplink wake-up signal in the first cell based on the first configuration information.

In a possible implementation, the resource configuration information includes one or more of the following information: a sending periodicity of the uplink wake-up signal, a time domain offset of the uplink wake-up signal, a time domain symbol absolute position of the uplink wake-up signal, a frequency domain offset of the uplink wake-up signal, a frequency domain carrier absolute position of the uplink wake-up signal, a root sequence of the uplink wake-up signal, a zero correlation zone of a sequence of the uplink wake-up signal, target received strength of the uplink wake-up signal, a maximum quantity of power ramping times of the uplink wake-up signal, and a power ramping step of the uplink wake-up signal. The time domain offset indicates an offset of the uplink wake-up signal in time domain relative to the first downlink reference signal in time domain, and the frequency domain offset indicates an offset of the uplink wake-up signal in frequency domain relative to the first downlink reference signal in frequency domain.

In a possible implementation, the first downlink reference signal further includes an initial access signal block, or includes the initial access signal block and system information. The initial access signal block includes one or more of the following information: a synchronization signal, a synchronization signal block SSB, and a part of information in the synchronization signal or a master information block MIB.

In a possible implementation, the downlink indication information includes first information, the first information indicates a format of the first configuration information, the first configuration information indicates the first resource, the first resource is the resource used to send the uplink wake-up signal in the first cell, and the first configuration information is associated with at least one terminal identifier. The performing cell reselection or cell reselection decision based on the downlink indication information includes: determining, based on the format that is of the first configuration information and that is indicated by the first information, a terminal identifier associated with the format; and if the terminal identifier associated with the format includes the identifier of the terminal, performing cell reselection or cell reselection decision.

In a possible implementation, the downlink indication information further includes third information, and the third information indicates a target cell. The performing cell reselection or cell reselection decision based on the downlink indication information includes: camping on the target cell based on the target cell indicated by the third information; or performing measurement of the first cell and the target cell to obtain measurement results, and camping on the first cell or the target cell based on the measurement results.

In a possible implementation, the third information indicates one or more of the following information: downlink signal resource configuration information, indicating a resource used to send a downlink reference signal in the target cell, where the downlink reference signal includes resource configuration information, the resource configuration information indicates a resource used to send an uplink wake-up signal in the target cell, and the downlink reference signal is periodically sent; and uplink signal resource configuration information, indicating the resource used to send the uplink wake-up signal in the target cell, where the uplink wake-up signal is used by the network device to determine whether the terminal satisfies a cell reselection condition after camping on the target cell.

In a possible implementation, the sending the uplink wake-up signal in the first cell includes: periodically sending the uplink wake-up signal in the first cell.

In a possible implementation, the method further includes: receiving the first downlink reference signal in the first cell, where the first downlink reference signal includes the resource configuration information, the resource configuration information indicates the resource of the uplink wake-up signal, and the first downlink reference signal is periodically sent. The sending the uplink wake-up signal in the first cell includes: when determining that signal strength of the first downlink reference signal does not satisfy a specified requirement, sending the uplink wake-up signal in the first cell.

In a possible implementation, the method further includes: receiving a second downlink reference signal in the first cell, where the second downlink reference signal is sent when the network device receives, on an uplink signal resource within specified duration, no uplink signal whose signal strength exceeds a specified threshold, and the uplink signal resource includes the resource that is indicated by the resource configuration information and that is used to send the uplink wake-up signal in the first cell, and/or a resource used to send an uplink response signal in the first cell; and if signal strength of the second downlink reference signal is greater than a specified threshold, sending the uplink response signal in the first cell, where the uplink response signal is used to determine whether the first cell satisfies a condition for stopping sending the first downlink reference signal in the first cell.

According to a third aspect, a communication method is provided. The method may be applied to a network device, and the method includes: sending a first downlink reference signal in a first cell, where the first downlink reference signal includes resource configuration information and an initial access signal block, the resource configuration information indicates a resource used by a terminal to send an uplink wake-up signal in the first cell, the initial access signal block includes a synchronization signal, and the first downlink reference signal is periodically sent; receiving the uplink wake-up signal in the first cell from the terminal, where the terminal is a terminal in an idle state or an inactive state; and when determining that the first cell satisfies a first condition, stopping sending the first downlink reference signal in the first cell.

In a possible implementation, the uplink wake-up signal is periodically sent. The determining that the first cell satisfies the first condition includes: determining that there is no terminal in a connected state in the first cell, and that no uplink wake-up signal whose signal strength exceeds a specified threshold is received on an uplink signal resource within specified duration. The uplink signal resource includes the resource that is indicated by the resource configuration information and that is used to send the uplink wake-up signal in the first cell.

In a possible implementation, the uplink wake-up signal is aperiodically sent. The method further includes: if receiving, on the uplink signal resource within the specified duration, no uplink signal whose signal strength exceeds the specified threshold, sending a second downlink reference signal in the first cell, where the second downlink reference signal is used to trigger a terminal in the idle state and a terminal in the inactive state that receive the second downlink reference signal to send uplink response signals in the first cell, where the uplink signal resource includes the resource that is indicated by the resource configuration information and that is used to send the uplink wake-up signal in the first cell, and/or a resource used to send the uplink response signal in the first cell. The determining that the first cell satisfies the first condition includes: determining that there is no terminal in the connected state in the first cell, and that no uplink response signal whose signal strength exceeds a specified threshold is received on the resource for the uplink response signal within specified duration.

According to a fourth aspect, a communication apparatus is provided, including a unit or module configured to perform the method according to any one of the first aspect, a unit or module configured to perform the method according to any one of the second aspect, or a unit or module configured to perform the method according to any one of the third aspect.

According to a fifth aspect, a communication apparatus is provided, including one or more processors configured to perform the method according to any one of the first aspect, perform the method according to any one of the second aspect, or perform the method according to any one of the third aspect.

According to a sixth aspect, a computer-readable storage medium is provided. The computer-readable storage medium stores a computer program or instructions, and when the computer program or the instructions are executed by a communication apparatus, the method according to any one of the first aspect is implemented, the method according to any one of the second aspect is implemented, or the method according to any one of the third aspect is implemented.

According to a seventh aspect, a computer program product is provided. When the computer program product is invoked by a computer, the computer is caused to perform the method according to any one of the first aspect, perform the method according to any one of the second aspect, or perform the method according to any one of the third aspect.

According to an eighth aspect, a chip or a chip system is provided, including: a memory, configured to store a computer program; and a processor, where after the processor invokes the computer program from the memory and runs the computer program, a communication apparatus on which the chip system is installed is caused to perform the method according to any one of the first aspect, perform the method according to any one of the second aspect, or perform the method according to any one of the third aspect.

BRIEF DESCRIPTION OF DRAWINGS

FIG. 1 is a schematic flowchart of cell reselection according to a related technology;
FIG. 2 is a diagram of an architecture of a mobile communication system to which an embodiment of this application is applied;
FIG. 3 is a schematic flowchart of a communication method according to an embodiment of this application;
FIG. 4 is a diagram of an implementation process of cell reselection and cell sleep when a terminal in an idle/inactive state periodically sends a first uplink wake-up signal according to an embodiment of this application;
FIG. 5 is a diagram of an implementation process of cell reselection and cell sleep when a terminal in an idle/inactive state aperiodically sends a first uplink wake-up signal according to an embodiment of this application;
FIG. 6 is a schematic flowchart of a communication method according to another embodiment of this application;
FIG. 7 is a diagram of a structure of a communication apparatus according to an embodiment of this application; and
FIG. 8 is a diagram of a structure of another communication apparatus according to an embodiment of this application.

DESCRIPTION OF EMBODIMENTS

For ease of understanding this application by a person skilled in the art, the following first explains some terms in embodiments of this application.

(1) Radio resource control (radio resource control, RRC) state of a terminal

In a new radio (new radio, NR) system, based on whether there is an RRC connection between the terminal and a network device, the terminal has three RRC states: an RRC idle state (idle state for short below), an RRC inactive state (inactive state for short below), and an RRC connected state (connected state for short below). There is an RRC connection between a terminal in the connected state and the network device, and the terminal may perform data transmission with the network device. There is no RRC connection between a terminal in the idle/inactive state and the network device, and the terminal cannot perform data transmission with the network device, but can receive broadcast information of a cell, for example, a system message or a paging message. The terminal in the idle/inactive state may switch to the connected state through a random access procedure.

(2) Cell reselection (cell reselection)

Cell reselection is a cell selection mechanism for a terminal in an idle/inactive state. Currently, after camping on a cell, the terminal in the idle/inactive state periodically measures downlink reference signals in a serving cell and a neighboring cell. When strength of the downlink reference signal in the serving cell is lower than a threshold, the terminal may select a cell with a higher priority or better signal quality as the serving cell. This process is referred to as cell reselection.

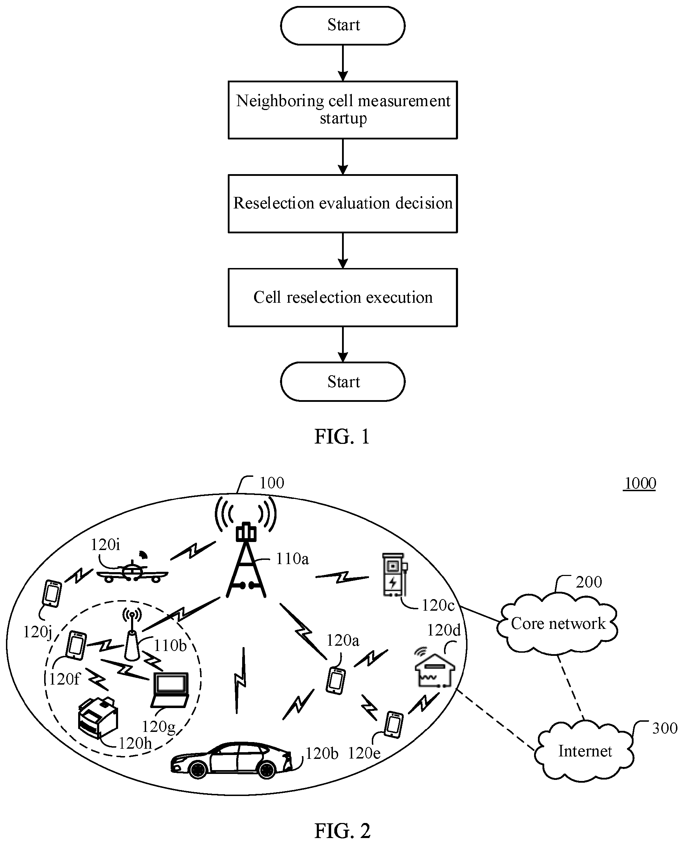

Currently, as shown in FIG. 1, a cell reselection procedure mainly includes three phases: neighboring cell measurement startup, reselection evaluation decision, and cell reselection execution. In the phase of neighboring cell measurement startup, the terminal decides, based on a measurement starting condition, whether to start neighboring cell measurement. If the terminal decides to start neighboring cell measurement, the terminal measures signal quality of a current serving cell and the neighboring cell. In the phase of reselection evaluation decision, the terminal decides whether a signal of the neighboring cell satisfies a cell reselection criterion. If the signal of the neighboring cell satisfies the cell reselection criterion, the terminal performs cell reselection. If the signal of the neighboring cell does not satisfy the cell reselection criterion, the terminal still camps on the current serving cell. In the phase of cell reselection execution, the terminal starts to receive a system message of a new cell. If the new cell has no access restriction (for example, if an operator configures some reserved cells or cells having access restriction, the terminal cannot access such cells), the terminal completes camping on the new cell. The system message received by the terminal in the new cell may include a synchronization signal block (synchronization signal block, SSB), a system message block 1 (system information block 1, SIB1), and the like.

(3) Network energy saving technology

Embodiments of this application relate to a network energy saving technology. For a scenario to which this application is applicable, the following different explanations may be provided.

In a first network energy saving technology, a network device may distinguish between a "normal mode", an "energy saving mode", and a "sleep mode" for a cell. In the normal mode, the network device normally sends all data and all control information in each cell. In the energy saving mode, for a cell having no data service or an extremely light-load service, the network device disables transmission of a data signal and transmission of a part of control signals in the cell. If there is no terminal in a connected state in the cell in the energy saving mode, and the network device does not sense existence of a terminal in an idle/inactive state, the network device may disable transmission of all control signals in the cell, so that the cell enters a sleep mode, to further implement network energy saving.

In this embodiment of this application, the terminal in the idle/inactive state may send an uplink signal, so that the network device can sense existence of the terminal in the idle/inactive state. Correspondingly, for example, a first cell is in the energy saving mode. When the network device does not sense existence of the terminal in the idle/inactive state in the first cell, and there is no terminal in the connected state in the first cell, the network device may switch the first cell from the energy saving mode to the sleep mode.

In a second network energy saving technology, a network device does not need to distinguish between a "normal mode", an "energy saving mode", and a "sleep mode" for a cell. The network device may send a signal in each cell according to the method provided in embodiments of this application. A first cell is used as an example. Because the first cell has no data service or data service load is light, the network device disables transmission of a data signal and transmission of a part of control signals in the first cell, and limits a transmission capability to implement energy saving of the network device. Then, when the network device senses that there is no longer a terminal in an idle/inactive state in the first cell, and there is no terminal in a connected state in the first cell, the network device may disable transmission of a control signal in the first cell, so that both the transmission of the data signal and the transmission of the control signal in the first cell are disabled.

It may be understood that, in the first network energy saving technology or the second network energy saving technology, the first cell is still used as an example. Regardless of whether the transmission of the data signal is disabled and whether the transmission of a part of control signals is disabled in the first cell, if the network device determines that there is no terminal in the connected state in the first cell, and if the network device does not sense that there is the terminal in the idle/inactive state in the first cell, the network device may disable data transmission and the transmission of all the control signals in the first cell, to implement energy saving of the network device.

It may be understood that the "energy saving mode" and the "sleep mode" in this application are short names for an overhead saving state of the network device, or may be replaced with other names. This is not limited in this embodiment of this application.

(4) Synchronization signal block (SSB)

The SSB is used for initial access of a terminal, and is an always-on broadcast signal of a network device. The broadcast signal may be periodically sent, and is used to carry some common information that needs to be periodically sent by the network device. The common information may include a primary synchronization block (primary synchronization signal, PSS), a secondary synchronization block (secondary synchronization signal, SSS), and a physical broadcast channel (physical broadcast channel, PBCH) that are used for synchronization between the terminal and a network. The PSS and the SSS may also be collectively referred to as a synchronization signal (synchronization signal, SS). The PBCH carries a master information block (master information block, MIB), and the MIB includes information about a cell accessed by the terminal and a resource indication of a system message block 1 (system information block 1, SIB1). The PSS and the SSS may be used to identify different physical cells.

In some embodiments of this application, for a purpose of network energy saving, for a cell having no data service or an extremely light-load service, the network device may disable transmission of a data signal and transmission of a part of control signals in the cell, and transmit only a remaining part of control signals.

In a possible implementation, to save energy, the part of control signals sent by the network device in the cell may include a part of information in the PSS, the SSS, or the MIB.

In another possible implementation, to save energy, the part of control signals sent by the network device in the cell may include a part of information in the SIB1.

Based on the cell reselection procedure in the related technology shown in FIG. 1, a network side needs to send downlink reference signals in a plurality of cells, for the idle/inactive terminal to measure the downlink reference signals in the plurality of cells. This is not conducive to network energy saving.

Therefore, embodiments of this application provide a communication method and a related apparatus that can implement the method. In embodiments of this application, a terminal in an idle/inactive state may send an uplink signal, so that a network device may determine, based on measurement of the uplink signal sent by the terminal, whether the terminal needs to perform cell reselection, and when determining that the terminal needs to perform cell reselection, indicate, by using downlink indication information, the terminal to perform cell reselection. In comparison with the cell reselection procedure shown in FIG. 1 in which the network device periodically sends downlink reference signals in a plurality of cells, in embodiments of this application, overheads of periodically sending the downlink reference signals by the network device can be reduced, and signal receiving and measurement overheads of the terminal can be further reduced, to facilitate network energy saving.

Embodiments of this application are applicable to the foregoing energy saving scenario.

To make the objectives, technical solutions, and advantages of this application clearer, the following further describes this application in detail with reference to the accompanying drawings. A specific operation method in a method embodiment may also be applied to an apparatus embodiment or a system embodiment.

Embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, and a 5th generation (5th generation, 5G) system or new radio (new radio, NR), or be applied to a future communication system, another similar communication system, or the like.

FIG. 2 is a diagram of an architecture of a communication system 1000 to which an embodiment of this application is applied. As shown in FIG. 2, the communication system includes a radio access network 100 and a core network 200. Optionally, the communication system 1000 may further include an internet 300. The radio access network 100 may include at least one radio access network device (for example, 110a and 110b in FIG. 2), and may further include at least one terminal (for example, 120a to 120j in FIG. 2). The terminal is connected to the radio access network device in a wireless manner, and the radio access network device is connected to the core network in a wireless or wired manner. A core network device and the radio access network device may be independent and different physical devices, or a function of the core network device and a logical function of the radio access network device may be integrated into a same physical device, or a part of functions of the core network device and a part of functions of the radio access network device may be integrated into one physical device. A wired or wireless manner may be used for connection between terminals and between radio access network devices. FIG. 2 is merely a diagram. The communication system may further include other network devices, for example, may further include a wireless relay device and a wireless backhaul device, which are not shown in FIG. 2.

The radio access network device may be a base station (base station), an evolved base station (evolved NodeB, eNodeB), a transmission reception point (transmission reception point, TRP), a next generation base station (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or unit that completes a part of functions of a base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete a part or all of functions of a physical layer. For specific descriptions of the foregoing protocol layers, refer to technical specifications related to a 3rd generation partnership project (3rd generation partnership project, 3GPP). The radio access network device may be a macro base station (for example, 110a in FIG. 2), may be a micro base station or an indoor station (for example, 110b in FIG. 2), or may be a relay node, a donor node, or the like. A specific technology and a specific device form that are used by the radio access network device are not limited in this embodiment of this application. For ease of description, the following uses a network device as a short name of the radio access network device for detailed description.

The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, automatic driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in this embodiment of this application. For ease of description, the following uses a terminal as a short name of the terminal for detailed description.

The network device and the terminal may be at fixed positions, or may be movable. The network device and the terminal may be deployed on land, including an indoor device, an outdoor device, a handheld device, or a vehicle-mounted device; may be deployed on water; or may be deployed on an airplane, a balloon, and an artificial satellite. Application scenarios of the network device and the terminal are not limited in this embodiment of this application.

Roles of the network device and the terminal may be relative. For example, a helicopter or an uncrewed aerial vehicle 120i in FIG. 2 may be configured as a mobile network device. For the terminal 120j that accesses the radio access network 100 via 120i, the uncrewed aerial vehicle 120i is a network device. However, for the network device 110a, 120i is a terminal. In other words, 110a and 120i communicate with each other by using a radio air interface protocol. Certainly, 110a and 120i may alternatively communicate with each other by using an interface protocol between network devices. In this case, for 110a, 120i is also a network device. Therefore, both the network device and the terminal may be collectively referred to as communication apparatuses. 110a and 110b in FIG. 2 may be referred to as communication apparatuses having a function of the network device, and 120a to 120j in FIG. 2 may be referred to as communication apparatuses having a function of the terminal.

Communication between the network device and the terminal, between the network devices, or between the terminals may be performed through a licensed spectrum, may be performed through an unlicensed spectrum, or may be performed through both a licensed spectrum and an unlicensed spectrum. Communication may be performed through a spectrum of 6 gigahertz (gigahertz, GHz) or below, or may be performed through a spectrum of 6 GHz or above. Alternatively, communication may be performed through both a spectrum below 6 GHz and a spectrum above 6 GHz. A spectrum resource used for wireless communication is not limited in this embodiment of this application.

In this embodiment of this application, the function of the network device may alternatively be performed by a module (for example, a chip) in the network device, or may be performed by a control subsystem including the function of the network device. The control subsystem including the function of the network device herein may be a control center in the foregoing application scenarios such as the smart grid, the industrial control, the smart transportation, and the smart city. The function of the terminal may alternatively be performed by a module (for example, a chip or a modem) in the terminal, or may be performed by an apparatus including the function of the terminal.

In this embodiment of this application, the network device sends a downlink signal or downlink information to the terminal, where the downlink information is carried on a downlink channel; and the terminal sends an uplink signal or uplink information to the base station, where the uplink information is carried on an uplink channel. To communicate with the network device, the terminal needs to establish a wireless connection to a cell controlled by the network device. The cell that establishes the wireless connection to the terminal is referred to as a serving cell of the terminal.

To make the objectives, technical solutions, and advantages of this application clearer, the following first describes some terms in embodiments of this application. A first cell is used as an example. The following first downlink reference signal, second downlink reference signal, and downlink indication information are reference signals or control information sent by a network device in the first cell, and a first uplink wake-up signal and an uplink response signal are reference signals or control information sent by a terminal in an idle/inactive state in the first cell. Optionally, the first cell may be a cell with a limited transmission capability (for related descriptions of the limited transmission capability, refer to the foregoing descriptions), or a cell in an energy saving mode. The first cell may alternatively be a cell with an unlimited transmission capability, or a cell in a normal mode.

(1) First downlink reference signal

In embodiments of this application, the network device may send the first downlink reference signal in the first cell.

In a possible implementation, the first downlink reference signal may be used for initial access of the terminal. For example, the first downlink reference signal may include an initial access signal block, and may further include system information. Optionally, the initial access signal block may include a synchronization signal (for example, including a PSS and/or an SSS), include an SSB, or include a part of information in the synchronization signal and a MIB. Optionally, the system information may be a SIB1 defined in a current protocol, may include a part of information in the SIB 1, or may include other system information (SIBs). This is not limited in embodiments of this application.

In another possible implementation, the first downlink reference signal may include resource configuration information. Optionally, the resource configuration information is used to configure, for the terminal, a resource of the first uplink wake-up signal. For example, the first downlink reference signal may include the resource configuration information, and the resource configuration information may indicate a resource used by the terminal to send the first uplink wake-up signal in the first cell.

For example, the resource configuration information may include one or more of the following information:

a sending periodicity of the first uplink wake-up signal, where in some embodiments of this application, the first uplink wake-up signal may be periodically sent, and in this case, the resource configuration information may include the sending periodicity of the first uplink wake-up signal; and in some other embodiments of this application, the first uplink wake-up signal is aperiodically sent, and in this case, the resource configuration information may not include the sending periodicity of the first uplink wake-up signal, or the sending periodicity is configured as 0;

a time domain offset of the first uplink wake-up signal, where the time domain offset indicates an offset of the first uplink wake-up signal in time domain relative to the first downlink reference signal in time domain, for example, the time domain offset may be an offset of a start symbol of the first uplink wake-up signal relative to a start symbol of the first downlink reference signal (for example, a start symbol of the SSB);

a time domain symbol absolute position of the first uplink wake-up signal, where the time domain symbol absolute position of the first uplink wake-up signal may be specifically, for example, a symbol index;

a frequency domain offset of the first uplink wake-up signal, where the frequency domain offset indicates an offset of the first uplink wake-up signal in frequency domain relative to the first downlink reference signal in frequency domain, for example, the frequency domain offset may be an offset of a start carrier of the first uplink wake-up signal relative to a start carrier of the first downlink reference signal (for example, a start carrier of the SSB);

a frequency domain carrier absolute position of the first uplink wake-up signal, where the frequency domain carrier absolute position of the first uplink wake-up signal may be specifically, for example, a carrier number;

a root sequence of the first uplink wake-up signal;

a zero correlation zone of a sequence of the first uplink wake-up signal;

target received strength of the first uplink wake-up signal;

a maximum quantity of power ramping times of the first uplink wake-up signal; and a power ramping step of the first uplink wake-up signal.

The resource configuration information may be carried on the initial access signal block in the first downlink reference signal. In this way, the resource configuration information and the synchronization signal may be carried on a same signal block. For example, the initial access signal block includes the SSB, and the resource configuration information may be carried on a PBCH in the SSB. The resource configuration information may alternatively be carried in the system information in the first downlink reference signal. In this way, the resource configuration information and the synchronization signal may be carried on different signal blocks. For example, the resource configuration information may be carried in a part of information in the SIB1 included in the first downlink reference signal, for example, may be carried in a reserved bit or a newly added bit in a part of information in the SIB1. The first downlink reference signal may alternatively be carried on an independent channel, and a resource occupied by the first downlink reference signal is indicated by the initial access signal block or system information.

Based on content included in the first downlink reference signal, the following provides several examples of the first downlink reference signal. For example, the first downlink reference signal includes the SSB, the SIB1, and the resource configuration information; the first downlink reference signal includes the SSB, a part of information in the SIB1, and the resource configuration information; or the first downlink reference signal includes the synchronization signal, a part of information in the MIB, a part of information in the SIB1, and the resource configuration information.

Optionally, the first downlink reference signal may be sent in the first cell in a broadcast manner, so that a terminal camping on the first cell can receive the first downlink reference signal.

Optionally, the first downlink reference signal may be a periodic signal. The network device periodically sends the first downlink reference signal, so that both a terminal that originally camps on the first cell and a terminal that newly camps on the first cell can receive the first downlink reference signal, to obtain the resource configuration information in the first downlink reference signal and send the first uplink wake-up signal in the first cell based on the resource configuration information. In addition, for a terminal outside the first cell, if using the first cell as a target cell for cell reselection, the terminal may receive the first downlink reference signal sent in the first cell, and perform cell reselection based on the initial access signal block in the first downlink reference signal, to camp on the first cell.

It may be understood that a name form and a function of the "first downlink reference signal" are not specifically limited in embodiments of this application. For example, the first downlink reference signal may also be understood as a first downlink signal.

(2) Uplink wake-up signal (wake-up signal, WUS)

In embodiments of this application, the terminal in the idle/inactive state in the first cell may send the uplink wake-up signal in the first cell. The network device may sense existence of the terminal in the idle/inactive state in the first cell based on the uplink wake-up signal, and the network device may further determine, based on signal received strength of the uplink wake-up signal, whether the terminal in the idle/inactive state in the first cell needs to perform cell reselection.

Optionally, the terminal in the idle/inactive state in the first cell may send, based on the resource configuration information in the first downlink reference signal, the uplink wake-up signal on a resource indicated by the resource configuration information.

In some embodiments of this application, the uplink wake-up signal is a periodic signal. In other words, the terminal may periodically send the uplink wake-up signal.

In some other embodiments of this application, the uplink wake-up signal is an aperiodic signal. The terminal sends the uplink wake-up signal only when a specific condition is satisfied. For example, the terminal sends the uplink wake-up signal in the first cell only when signal strength of the first downlink reference signal received in the first cell is low.

The uplink wake-up signal may be a reference signal, for example, may be an uplink reference signal periodically sent by the terminal. The uplink wake-up signal may alternatively be another signal, for example, aperiodically sent uplink control information (uplink control information, UCI). The terminal sends the UCI to the network device when the signal strength of the first downlink reference signal received in the first cell is low. Optionally, the UCI may be in a specific format, so that the network device determines, based on measurement of the signal, whether the terminal needs to perform cell reselection.

It may be understood that a name form and a function of the uplink wake-up signal are not specifically limited in this application. For example, the uplink wake-up signal may also be understood as an uplink reference signal or a first uplink signal.

(3) Downlink indication information

In embodiments of this application, the network device may send the downlink indication information to the terminal in the idle/inactive state in the first cell, to indicate the terminal in the idle/inactive state to perform cell reselection.

Optionally, the downlink indication information may be sent in a broadcast manner.

Optionally, the downlink indication information may be carried in downlink control signaling, for example, may be carried in DCI or higher layer signaling. Alternatively, the downlink indication information may be carried in a radio network temporary identity (radio network temporary identity, RNTI) that is used to scramble a message sent to the terminal in the idle/inactive state.

It may be understood that a name form and a function of the downlink indication information are not specifically limited in this application.

(4) Second downlink reference signal

In some embodiments of this application, when the first uplink wake-up signal is an aperiodic signal, the network device may further send the second downlink reference signal in the first cell when determining that a specific condition is satisfied.

Optionally, if receiving, on an uplink signal resource within specified duration, no uplink signal whose signal strength exceeds a specified threshold, the network device may send the second downlink reference signal in the first cell. The second downlink reference signal is used to trigger a terminal in the idle/inactive state that receives the second downlink reference signal to send an uplink response signal in the first cell.

In a possible implementation, the uplink signal resource includes the resource that is indicated by the resource configuration information and that is used to send the first uplink wake-up signal in the first cell. To be specific, if the network device receives, in the first cell, no first uplink wake-up signal sent by the terminal in the idle/inactive state, the network device may send the second downlink reference signal in the first cell. Alternatively, if the network device receives, in the first cell, the first uplink wake-up signal sent by the terminal in the idle/inactive state, but signal strength of the uplink signal is low, the network device may send the second downlink reference signal in the first cell.

In another possible implementation, the uplink signal resource includes a resource used to send the uplink response signal in the first cell. To be specific, if the network device receives, in the first cell, no uplink response signal sent by the terminal in the idle/inactive state, the network device may send the second downlink reference signal in the first cell. Alternatively, if the network device receives, in the first cell, the uplink response signal sent by the terminal in the idle/inactive state, but signal strength of the uplink signal is low, the network device may send the second downlink reference signal in the first cell.

In another possible implementation, the uplink signal resource includes both the resource that is indicated by the resource configuration information and that is used to send the first uplink wake-up signal in the first cell, and a resource used to send the uplink response signal in the first cell. To be specific, if the network device receives, in the first cell, no uplink signal (including the first uplink wake-up signal and the uplink response signal) sent by the terminal in the idle/inactive state, the network device may send the second downlink reference signal in the first cell. Alternatively, if the network device receives, in the first cell, an uplink signal (including the first uplink wake-up signal or the uplink response signal) sent by the terminal in the idle/inactive state, but signal strength of the uplink signal is low, the network device may send the second downlink reference signal in the first cell.

Optionally, a resource of the second downlink reference signal may be indicated in an explicit manner, for example, may be indicated in the resource configuration information.

Optionally, the resource of the second downlink reference signal may alternatively be indicated implicitly. For example, there is an association relationship between the resource of the second downlink reference signal and the resource of the first downlink reference signal. Correspondingly, the network device and the terminal may receive and send the second downlink reference signal by using the resource of the first downlink reference signal and the foregoing association relationship. For example, a time domain offset between the second downlink reference signal and the first downlink reference signal, and a correspondence between a sequence of the second downlink reference signal and a sequence of the first downlink reference signal may be pre-agreed on or preconfigured. Correspondingly, the network device may determine a time domain position of the second downlink reference signal based on a time domain resource occupied by the first downlink reference signal and the time domain offset, and determine the sequence of the second downlink reference signal based on the sequence of the first downlink reference signal and the correspondence between the sequences, so that the second downlink reference signal may be sent at a corresponding resource position by using a corresponding sequence. Similarly, the terminal may receive, at a corresponding resource position, the second downlink reference signal sent by using the corresponding sequence.

Optionally, the second downlink reference signal may be DCI, higher layer signaling, or a reference signal.

It may be understood that a name form and a function of the second downlink reference signal are not specifically limited in this application. For example, the second downlink reference signal may also be referred to as a DL-RS.

(5) Uplink response signal

In some embodiments of this application, after receiving the second downlink reference signal, the terminal in the idle/inactive state in the first cell may send the uplink response signal in response to the second downlink reference signal.

Optionally, only after receiving the second downlink reference signal in the first cell, the terminal in the idle/inactive state in the first cell may send the uplink response signal in response to the second downlink reference signal. If the terminal in the idle/inactive state in the first cell receives a downlink reference signal (for example, a DL-RS) in a second cell, the terminal does not send an uplink response signal in response to the downlink reference signal in the second cell, where the second cell is a neighboring cell of the first cell. In this way, because signal strength of the second downlink reference signal received by the terminal in the idle/inactive state far away from the first cell is weak, the terminal in the idle/inactive state far away from the first cell is not triggered to send the uplink response signal in the first cell, so that a probability of replying to a distant neighboring cell can be reduced.

Optionally, after receiving the second downlink reference signal, if determining that the signal strength of the second downlink reference signal is greater than a specified threshold, the terminal in the idle/inactive state in the first cell sends the uplink response signal; or if determining that the signal strength of the second downlink reference signal is less than or equal to a specified threshold, the terminal in the idle/inactive state in the first cell does not send the uplink response signal, so that the probability of replying to the distant neighboring cell can be reduced.

Optionally, the uplink response signal may be a reference signal or another signal. This is not limited in embodiments of this application.

It may be understood that a name form and a function of the uplink response signal are not specifically limited in this application. For example, the uplink response signal may also be referred to as a UL-Response (UL-RES for short).

(6) Resource

The "resource" in embodiments of this application may be one or more of a time domain resource, a frequency domain resource, a code domain resource, and a power domain resource. For example, the resource of the uplink wake-up signal may include one or more of a time domain resource of the uplink wake-up signal, a frequency domain resource of the uplink wake-up signal, a code domain resource of the uplink wake-up signal, power of the uplink wake-up signal, and the like. In a possible manner, the code domain resource may be a sequence.

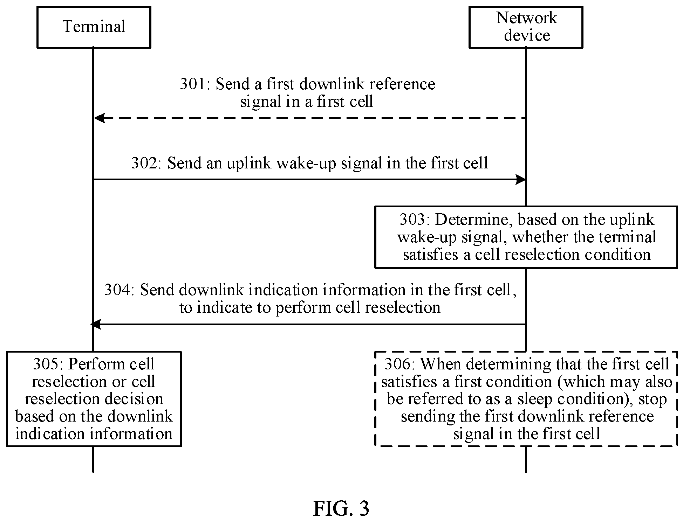

The following describes the communication method provided in embodiments of this application with reference to FIG. 3 to FIG. 6.

Based on the architecture of the network system shown in FIG. 2 and content described in the foregoing related technologies, FIG. 3 is a schematic flowchart of an example of a communication method according to an embodiment of this application.

As shown in FIG. 3, the communication method may include the following steps.

Step 301: A network device sends a first downlink reference signal in a first cell.

For related descriptions of content included in the first downlink reference signal and a sending manner, refer to the foregoing descriptions.

In a possible implementation, resource configuration information is at a cell level. For example, the resource configuration information includes first configuration information, the first configuration information indicates a first resource, and the first resource is a resource used to send an uplink wake-up signal in the first cell. In other words, the resource configuration information indicates only the resource used to send the uplink wake-up signal in the first cell.

In a possible implementation, resource configuration information is at a cell level. The resource configuration information indicates resources used to send uplink signals in a plurality of cells, and resources used to send uplink signals in different cells may be different. Optionally, the plurality of cells may include the first cell and one or more neighboring cells of the first cell. For example, the resource configuration information includes M pieces of configuration information (M is an integer greater than 1), the M pieces of configuration information include first configuration information, the first configuration information indicates a first resource, and the first resource is a resource used to send an uplink wake-up signal in the first cell. Optionally, the M pieces of configuration information further include second configuration information, the second configuration information indicates a second resource, and the second resource is a resource used to send an uplink wake-up signal in a second cell. By analogy, the resource configuration information may further include more configuration information, to indicate resources used to send uplink wake-up signals in more cells. Based on the resource configuration information, the terminal may send uplink wake-up signals in the plurality of cells. In other words, the resource configuration information may indicate resources for sending the uplink wake-up signals in the plurality of cells (for example, including the first cell and the neighboring cell of the first cell), so that resources occupied by uplink wake-up signals in different cells are different. In this case, for a terminal in an idle/inactive state, the network device may receive uplink wake-up signals sent by the terminal in different cells.

In a possible implementation, resource configuration information is at a cell group level. For example, the resource configuration information includes first configuration information, the first configuration information indicates a first resource, the first resource is a resource used by a terminal in a first cell group to send an uplink wake-up signal, and the first cell group includes the first cell. In other words, the resource configuration information may indicate a resource used by a terminal to send an uplink wake-up signal in a cell group including the first cell, and a resource used to send an uplink wake-up signal in each cell in the cell group has same resource configuration information. For example, the uplink wake-up signal in each cell in the cell group has a same sending periodicity, time domain offset, and frequency domain offset. Based on the resource configuration information, the terminal may send uplink wake-up signals in a plurality of cells.

In a possible implementation, resource configuration information that is of an uplink wake-up signal and that is used by a terminal may be associated with an identifier of the terminal, so that richness of a resource configuration of the uplink wake-up signal of the terminal is increased, a quantity of terminals under a same resource configuration is reduced, and a network side improves accuracy of uplink mobility management (for example, cell reselection). A specific implementation may be as follows: The resource configuration information includes N pieces of candidate configuration information, the N pieces of candidate configuration information indicate N candidate resources used to send the uplink wake-up signal in the first cell, and the N pieces of candidate configuration information are associated with K terminal identifiers. In this way, a terminal in the idle/inactive state in the first cell may determine, based on a terminal identifier of the terminal, one piece of configuration information that is in the N pieces of candidate configuration information and that is associated with the terminal identifier, to send an uplink wake-up signal in the first cell based on a resource indicated by the configuration information.

Optionally, in a possible association manner, formats (formats) of the N pieces of candidate configuration information are different, and there is a correspondence between the format of the candidate configuration information and the terminal identifier. Optionally, the correspondence may satisfy the following formula 1:

$$(i + \text{offset}) \bmod T = \frac{T}{N} * \text{UE}_{\text{ID}} \bmod N \quad (1)$$

i identifies the format of the configuration information, T is a configured time domain periodicity length, offset is an offset of the format of the configuration information, N is a total quantity of formats of the configuration information, $\text{UE}_{\text{ID}}$ represents the terminal identifier, and mod is a modulo operator. According to the foregoing formula, the terminal may determine, based on the terminal identifier of the terminal and a parameter (for example, the configured time domain periodicity length T and the total quantity N of formats of the configuration information) configured by the network side, a format of the configuration information used by the terminal to send the uplink wake-up signal in the first cell, so that the corresponding configuration information can be obtained based on the format, to send the uplink wake-up signal based on the resource indicated by the configuration information.

Optionally, in another possible association manner, there is a correspondence between a time domain configuration (for example, a symbol), a code domain configuration (for example, a sequence), or the like of the uplink wake-up signal and the terminal identifier. Optionally, the correspondence may be presented in a form of a table. For example, the resource configuration information indicates N candidate sequences, and the table includes a number of each candidate sequence and one or more terminal identifiers corresponding to each candidate sequence. According to the table, the terminal may determine, based on the terminal identifier of the terminal, a sequence corresponding to the terminal identifier, so that the terminal may send the uplink wake-up signal by using the sequence.

The foregoing step 301 may be an optional step. For example, when the resource configuration information is preconfigured, the foregoing step 301 may be omitted.

Optionally, the network device may further send a downlink signal in another cell. For content included in the downlink signal and a sending manner, refer to an implementation process in which the network device sends the first downlink reference signal in the first cell. For example, the network device sends a downlink signal in the second cell, where the second cell is a neighboring cell of the first cell.

Step 302: The terminal in the idle/inactive state in the first cell sends the uplink wake-up signal in the first cell. Correspondingly, the network device receives the uplink wake-up signal in the first cell.

In this embodiment of this application, the terminal may send the uplink wake-up signal in the first cell based on the resource indicated by the resource configuration information. The terminal may obtain, by using the received first downlink reference signal, the resource configuration information included in the first downlink reference signal. The resource configuration information may alternatively be preconfigured. This is not limited in this embodiment of this application.

In a possible implementation, if the resource configuration information is at the cell level, for example, the resource configuration information includes the first configuration information, the terminal may send the uplink wake-up signal in the first cell based on the first configuration information.

In a possible implementation, if the resource configuration information is at the cell group level, for example, the resource configuration information includes the first configuration information, the terminal may send the uplink wake-up signal in the first cell based on the first configuration information. Optionally, the terminal in the first cell may further send an uplink wake-up signal in another cell in the cell group based on the first configuration information.

In a possible implementation, if the resource configuration information indicates the resources used to send the uplink wake-up signals in the plurality of cells, and resources used to send uplink wake-up signals in different cells may be different, for example, the resource configuration information includes the M pieces of configuration information, the M pieces of configuration information include the first configuration information, the first configuration information indicates the first resource, and the first resource is the resource used to send the uplink wake-up signal in the first cell, the terminal may send the uplink wake-up signal in the first cell based on the first configuration information. Optionally, the M pieces of configuration information further include the second configuration information, the second configuration information indicates the second resource, and the second resource is the resource used to send the uplink wake-up signal in the second cell. In this case, the terminal may send the uplink wake-up signal in the second cell based on the second configuration information.

By analogy, the terminal may send the uplink wake-up signals in the plurality of cells indicated by the resource configuration information.

In a possible implementation, resource configuration information that is of an uplink wake-up signal and that is used by a terminal is associated with an identifier of the terminal. For example, the resource configuration information includes the N pieces of candidate configuration information, the N pieces of candidate configuration information indicate the N candidate resources used to send the uplink wake-up signal in the first cell, and the N pieces of candidate configuration information are associated with the K terminal identifiers. Correspondingly, the terminal may determine, based on the identifier of the terminal, the first configuration information that is in the N pieces of candidate configuration information and that is associated with the identifier of the terminal, and send the uplink wake-up signal in the first cell based on the first configuration information.

Based on the foregoing descriptions, in a possible implementation, the resource configuration information may indicate the resources for the uplink wake-up signals in the plurality of cells, and resource configuration information corresponding to each cell may include a plurality of pieces of candidate configuration information. For example, the resource configuration information includes first resource configuration information corresponding to the first cell and second resource configuration information corresponding to the second cell. The first resource configuration information includes N pieces of candidate configuration information, a format of each piece of candidate configuration information is associated with one or more terminal identifiers, and the association relationship may satisfy the foregoing formula 1. Similarly, the second resource configuration information also includes a plurality of pieces of candidate configuration information, and a format of each piece of candidate configuration information is associated with one or more terminal identifiers. In this case, the terminal may determine, based on the identifier of the terminal and according to the foregoing formula 1, configuration information (or used resources) used to send an uplink signal in the first cell and an uplink signal in the second cell, and may further, may send the uplink wake-up signals in the plurality of cells.

In some embodiments of this application, the uplink wake-up signal is periodically sent. For example, the terminal may periodically send the uplink wake-up signal in the first cell based on the sending periodicity in the resource configuration information.

In some other embodiments of this application, the uplink wake-up signal is aperiodically sent. The terminal sends the uplink wake-up signal in the first cell only when determining that a specified condition is satisfied. Optionally, the terminal receives the first downlink reference signal in the first cell, and if determining that signal strength of the received first downlink reference signal does not satisfy a specified requirement, sends the uplink wake-up signal in the first cell. In other words, the uplink wake-up signal is not unconditionally and periodically sent, but is triggered to be sent based on a specific condition. Therefore, in comparison with periodically sending the uplink wake-up signal, energy saving of the terminal can be implemented.

Optionally, that the terminal in the first cell determines whether the signal strength of the first downlink reference signal satisfies the specified requirement may include the following several cases.

Case 1: The terminal in the first cell receives the first downlink reference signal in the first cell. If the signal strength of the first downlink reference signal received in the first cell is less than a specified threshold, it may be determined that the signal strength of the first downlink reference signal does not satisfy the specified requirement. In other words, for the terminal, signal quality of the first cell is poor, and cell reselection may need to be performed. Therefore, it is considered that a condition for sending the uplink wake-up signal is satisfied currently. In this case, the terminal sends the uplink wake-up signal, so that the network device can determine, by measuring the uplink wake-up signal, whether the terminal needs to perform cell reselection. If the signal strength of the first downlink reference signal is greater than or equal to the specified threshold, it may be determined that the signal strength of the first downlink reference signal satisfies the specified requirement. In this case, cell reselection does not need to be performed, and therefore the uplink wake-up signal does not need to be sent.

Case 2: The terminal in the first cell may not only receive the first downlink reference signal sent by the network device in the first cell, but also receive a downlink signal sent by the network device in the neighboring cell (for example, the second cell). If a difference obtained by subtracting signal strength of the downlink signal received in the second cell from the signal strength of the first downlink reference signal received by the terminal in the first cell is less than a specified threshold, it may be determined that the signal strength of the first downlink reference signal does not satisfy the specified requirement. In other words, for the terminal, signal quality of the first cell is not much higher than that of the second cell, and cell reselection may need to be performed. In this case, the terminal sends the uplink wake-up signal, so that the network device can determine, by measuring the uplink wake-up signal, whether the terminal needs to perform cell reselection. If the difference is greater than or equal to the specified threshold, it may be determined that the signal strength of the first downlink reference signal satisfies the specified requirement. In this case, cell reselection does not need to be performed, and therefore the uplink wake-up signal does not need to be sent.

The foregoing merely lists, as examples, several methods for determining whether the signal strength of the first downlink reference signal satisfies the specified requirement. In this embodiment of this application, another method may alternatively be used. This is not limited herein.

Step 303: The network device determines, based on the uplink wake-up signal, whether the terminal satisfies a cell reselection condition.

In a possible implementation, the terminal in the first cell may send the uplink wake-up signal (for example, a WUS) in the first cell. Correspondingly, the network device may determine, based on signal strength of the uplink wake-up signal that is sent by the terminal and that is received in the first cell, whether the terminal satisfies the cell reselection condition. In other words, the network device may perform cell reselection decision based on measurement of the uplink wake-up signal in the first cell. Optionally, a manner in which the network device performs cell reselection decision may be as follows: The network device receives the uplink wake-up signal (for example, the WUS) in the first cell from the terminal, and if the signal strength of the uplink wake-up signal is less than a specified threshold, determines that the terminal needs to perform cell reselection; or if the signal strength of the uplink wake-up signal is not less than the specified threshold, determines that the terminal does not need to perform cell reselection.

In a possible implementation, the terminal in the first cell may send the uplink wake-up signals in the first cell and the second cell. Correspondingly, the network device may determine, based on the signal strength of the uplink wake-up signal sent by the terminal in the first cell and signal strength of the uplink wake-up signal sent by the terminal in the second cell, whether the terminal satisfies the cell reselection condition. In other words, the network device may perform cell reselection decision based on measurement of the uplink wake-up signals in the first cell and the second cell. Optionally, a manner in which the network device performs cell reselection decision may be as follows: The network device separately receives in the first cell and the second cell, the uplink wake-up signals from the terminal, and if a difference between the signal strength of the uplink wake-up signal received in the first cell and the signal strength of the uplink wake-up signal received in the second cell is less than a specified threshold, determines that the terminal needs to perform cell reselection; or if the signal strength difference is not less than the specified threshold, determines that the terminal does not need to perform cell reselection.

In a possible implementation, the network device may identify the terminal based on a resource (or configuration information corresponding to the resource) occupied by the received uplink wake-up signal and an association relationship between the configuration information of the uplink wake-up signal and the identifier of the terminal, to indicate, based on the uplink wake-up signals that are sent by the terminal and that are received in the first cell and the second cell, whether the terminal needs to perform cell reselection, or indicate whether the terminal needs to perform cell reselection decision. For the association relationship between the resource (or the configuration information corresponding to the resource) occupied by the uplink wake-up signal and the identifier of the terminal, refer to the foregoing descriptions.

Step 304: If determining that the terminal satisfies the cell reselection condition, the network device sends downlink indication information in the first cell, where the downlink indication information indicates the terminal to perform cell reselection.

In a possible implementation, the downlink indication information is sent in a broadcast manner.

In a possible implementation, the downlink indication information may include first information, for the terminal to determine whether the downlink indication information is sent to the terminal. Considering that the resource configuration information may be associated with the terminal identifier, the first information may be used to indicate a format of a piece of configuration information in the resource configuration information. In this way, the terminal may determine, based on an association relationship between the configuration information and the terminal identifier, whether the format of the configuration information is associated with the identifier of the terminal, to determine whether the downlink indication information is sent to the terminal.

For example, after determining that a terminal in the first cell satisfies the cell reselection condition, the network device determines, based on an identifier of the terminal and an association relationship between the resource configuration information and the terminal identifier, configuration information associated with the identifier of the terminal. For example, the configuration information is the first configuration information, the first configuration information indicates the first resource, and the first resource is the resource used to send the uplink wake-up signal in the first cell. The network device sends the downlink indication information, where the downlink indication information includes the first information, and the first information indicates a format of the first configuration information.

Optionally, the first information may be indicated in the following several manners.

Indication manner 1: The first information is set in a paging radio network temporary identifier (paging radio network temporary identifier, P-RNTI). For example, a reserved bit of the P-RNTI may be used to carry the first information. Correspondingly, the downlink indication information may be downlink control information (downlink control information, DCI). When sending the DCI, the network device scrambles physical downlink control channel (physical downlink control channel, PDCCH) paging redundancy check (cyclic redundancy check, CRC) information by using the P-RNTI, to indicate that the DCI is scheduling information of a paging message. Correspondingly, the terminal may descramble the DCI to obtain the first information included in the P-RNTI.

Indication manner 2: The first information is set in a system information network temporary identifier (system information network temporary identifier, SI-RNTI). For example, a reserved bit of the SI-RNTI may be used to carry the first information. Correspondingly, the downlink indication information may be DCI. When sending the DCI, the network device scrambles PDCCH CRC by using the SI-RNTI, to indicate that the DCI is scheduling information of a system message. Correspondingly, the terminal may descramble the DCI to obtain the first information included in the SI-RNTI.

Indication manner 3: The first information is transmitted by using DCI newly defined in this embodiment of this application.

In a possible implementation, the downlink indication information may not include the first information, and the network device may implicitly indicate the format of the configuration information. For example, an association relationship between a time-frequency resource used for the downlink indication information and the format of the configuration information may be set, so that different time-frequency resources are associated with different formats of the configuration information. After determining that the terminal satisfies the cell reselection condition, the network device determines, based on the identifier of the terminal, a format of configuration information associated with the terminal, then determines, based on an association relationship between the format of the configuration information and the time-frequency resource of the downlink indication information, a time-frequency resource of downlink indication information associated with the format of the configuration information, and sends the downlink indication information based on the resource. Correspondingly, the terminal may determine, based on the time-frequency resource of the downlink indication information, a format of configuration information associated with the downlink indication information, and then determine a terminal identifier associated with the format of the configuration information, to determine whether the downlink indication information is downlink indication information sent to the terminal.

In a possible implementation, the downlink indication information may include second information, and the second information indicates whether to perform cell reselection.

Optionally, a value of the second information may be a first value or a second value. The first value indicates that cell reselection needs to be performed, and the second value indicates that cell reselection does not need to be performed. Optionally, if the network device determines, based on the measurement of the uplink wake-up signal, that the cell reselection condition is satisfied, the network device adds, to the downlink indication information, second information whose value is the first value; or if the network device determines, based on the measurement of the uplink wake-up signal, that the cell reselection condition is not satisfied, the network device adds, to the downlink indication information, second information whose value is the second value. The format of the configuration information corresponding to the uplink wake-up signal may be associated with a plurality of terminals, and only a part of the plurality of terminals may need to perform cell reselection, or all the terminals may need to perform cell reselection. Therefore, after receiving the downlink indication information, these terminals may first perform cell reselection decision based on measurement, and then determine whether to perform cell reselection based on a result of the cell reselection decision.

It may be understood that the second information may be omitted, in other words, the terminal is implicitly indicated to perform cell reselection. For example, if the network device determines, based on the measurement of the uplink wake-up signal, that the cell reselection condition is satisfied, the network device sends the downlink indication information; or if the network device determines, based on the measurement of the uplink wake-up signal, that the cell reselection condition is not satisfied, the network device does not send the downlink indication information. After receiving the downlink indication information, the terminal associated with the format of the configuration information corresponding to the uplink wake-up signal may first perform cell reselection decision based on the measurement, and then determine, based on the result of the cell reselection decision, whether to perform cell reselection.

Optionally, the second information may be indicated in the following several manners.

Indication manner 1: The second information is set in a P-RNTI. For example, a reserved bit of the P-RNTI may be used to carry the second information. Correspondingly, when sending the DCI (the downlink indication information), the network device scrambles the PDCCH CRC by using the P-RNTI, to indicate that the DCI is the scheduling information of the paging message. Correspondingly, the terminal may descramble the DCI to obtain the second information included in the P-RNTI.

Indication manner 2: The second information is set in an SI-RNTI. For example, a reserved bit of the SI-RNTI may be used to carry the second information. Correspondingly, when sending the DCI (the downlink indication information), the network device scrambles the PDCCH CRC by using the SI-RNTI, to indicate that the DCI is the scheduling information of the system message. Correspondingly, the terminal may descramble the DCI to obtain the second information included in the SI-RNTI.

Indication manner 3: The second information is transmitted by using DCI newly defined in this embodiment of this application. Optionally, the first information and the second information may be sent by using same DCI, or the first information and the second information may be sent by using different DCI.

In a possible implementation, the downlink indication information may include third information, and the third information indicates a target cell.

Optionally, the third information may indicate one or more of the following information, or the third information may include one or more of the following information:

> a cell identifier of the target cell, where the cell identifier of the target cell may be, for example, a physical cell identifier (physical cell identifier, PCI) of the target cell;
> downlink signal resource configuration information, indicating a resource used to send a downlink signal in the target cell, where the downlink signal is a periodically sent signal, the downlink signal sent by the network device in the target cell is similar to the first downlink reference signal sent by the network device in the first cell, and the downlink signal may be, for example, a downlink signal used for initial access of the terminal, where for example, the downlink signal sent in the target cell may be an SSB, a SIB1, or another system information block; and
> uplink signal resource configuration information, indicating a resource used to send an uplink signal in the target cell, where the uplink signal sent by the terminal in the target cell is similar to the uplink wake-up signal sent by the terminal in the first cell.

Optionally, the third information may be indicated in the following several manners.

Indication manner 1: The third information and the first information are transmitted over a same channel, where the channel may be a channel newly defined in this embodiment of this application.

Indication manner 2: The third information is transmitted over an independent channel. Optionally, a resource on which the channel used to transmit the third information is located may be indicated by the first information or the second information.

In a possible implementation, if the network device has stopped periodically sending the downlink signal (the downlink signal is similar to the first downlink reference signal that is sent in the first cell and that is used for the initial access of the terminal, for example, may include an initial access signal block and system information) in the target cell indicated by the third information in the downlink indication information, and the target cell is a cell served by the network device, the network device may restart to periodically send the downlink signal in the target cell. In another possible implementation, if the network device has stopped periodically sending the downlink signal in the target cell indicated by the third information in the downlink indication information, and the target cell is a cell served by another network device, the network device may indicate the another network device (for example, through an interface between base stations) to restart to periodically send the downlink signal in the target cell. In this way, the terminal may perform measurement of the target cell, to determine whether to reselect the target cell, or the terminal may complete camping on the target cell based on the downlink signal periodically sent in the target cell.

Step 305: The terminal receives the downlink indication information, and performs cell reselection or cell reselection decision based on the downlink indication information.

After receiving the downlink indication information, the terminal may first determine whether the downlink indication information is sent to the terminal. In a possible manner, the downlink indication information includes the first information, and the terminal may determine, based on the format of the configuration information indicated by the first information, a terminal identifier associated with the format of the configuration information. If the terminal identifier includes the identifier of the terminal, the terminal determines that the downlink indication information may be sent to the terminal. In another possible manner, the downlink indication information does not include the first information, but a resource in which the downlink indication information is located is associated with a format of the resource configuration information. The terminal may determine, based on the resource in which the downlink indication information is located, a format of configuration information associated with the resource, then determine a terminal identifier associated with the format of the configuration information, and determine whether the downlink information may be sent to the terminal.

If the terminal determines that the downlink indication information may be sent to the terminal, and the downlink indication information indicates the terminal to perform cell reselection (for example, whether to perform cell reselection may be determined based on the second information in the downlink indication information), the terminal may perform cell reselection or cell reselection decision.

Optionally, the terminal may perform cell reselection or cell reselection decision based on the downlink indication information in the following several manners.

Manner 1: The downlink indication information includes the third information, and the third information indicates the identifier of the target cell. Correspondingly, the terminal may directly perform cell camping based on the identifier of the target cell, to camp on the target cell.

Optionally, the third information further indicates the downlink signal resource configuration information of the target cell. The terminal may receive, in the target cell based on the downlink signal resource configuration information, the periodically sent downlink signal, obtain synchronization information of the target cell based on the received downlink signal, complete downlink synchronization with the target cell, and complete camping on the target cell based on the system information in the downlink signal received in the target cell. After successfully camping on the target cell, the terminal device may further send the uplink signal in the target cell based on resource configuration information (indicating the resource for sending the uplink signal in the target cell) included in the downlink signal.

Manner 2: The downlink indication information includes the third information, and the third information indicates the identifier of the target cell and the downlink signal resource configuration information of the target cell. Correspondingly, the terminal may receive the downlink signal in the target cell based on the downlink signal resource configuration information, and perform cell reselection decision based on signal strength of the downlink signal received in the target cell and the signal strength of the downlink signal received in the first cell. If the target cell satisfies the cell reselection condition, the terminal camps on the target cell; or if the target cell does not satisfy the cell reselection condition, the terminal still camps on the first cell.

Optionally, the terminal performs cell reselection when determining that one or more of the following conditions are satisfied.

Condition 1: If the signal strength of the first downlink reference signal received in the first cell is less than the specified threshold, cell reselection is performed.

Condition 2: If the signal strength of the first downlink reference signal received in the first cell is less than a first specified threshold, and the signal strength of the downlink signal received in the second cell is greater than or equal to a second specified threshold, cell reselection is performed.

Condition 3: If a difference between the signal strength of the first downlink reference signal received in the first cell and the signal strength of the downlink signal received in the target cell is less than a specified threshold, cell reselection is performed.

Manner 3: The downlink indication information does not include the third information, and the resource configuration information in the first downlink reference signal sent by the network device in the first cell indicates resources for sending downlink reference signals in a plurality of cells. Correspondingly, the terminal may receive the downlink signals in the plurality of cells based on the resource configuration information. After receiving the downlink indication information indicating the terminal to perform cell reselection, the terminal may determine, based on the signal strength of the first downlink reference signal received in the first cell and signal strength of a downlink signal received in another cell, whether the terminal satisfies the cell reselection condition. If the terminal satisfies the cell reselection condition, the terminal performs cell reselection, to camp on the target cell.

Optionally, configuration information such as a threshold in the foregoing cell reselection or cell reselection decision manner may be predefined, may be provided in a configuration of the first downlink reference signal or a second downlink reference signal sent by the network device, or may be provided in the first downlink reference signal. This is not limited in this embodiment of this application.

It may be understood that the foregoing merely lists, as examples, several methods for performing cell reselection or cell reselection decision by the terminal based on the downlink indication information. This is not limited in this embodiment of this application.

In the procedure shown in FIG. 3, the terminal in the idle/inactive state may send the uplink wake-up signal, so that the network device can determine, based on the measurement of the uplink wake-up signal, whether the terminal satisfies the cell reselection condition, and indicate the terminal to perform cell reselection when the terminal satisfies the cell reselection condition. In this embodiment of this application, the network device performs cell reselection decision based on the measurement of the uplink wake-up signal. Therefore, in comparison with the related technology in which the network device periodically sends the downlink reference signal for the terminal to perform measurement, network energy saving can be implemented.

Based on the procedure shown in FIG. 3, the terminal in the idle/inactive state in the first cell may send the uplink wake-up signal in the first cell, so that the network device can sense existence of the terminal in the idle/inactive state in the first cell. To further save network energy, in a possible implementation, the network device may disable transmission of the downlink signal when sensing that there is no longer the terminal in the idle/inactive state in the first cell, to implement network energy saving. Specifically, the procedure shown in FIG. 3 may further include step 306: When determining that the first cell satisfies a first condition (which may also be referred to as a sleep condition), the network device may stop sending the first downlink reference signal in the first cell, or if the first cell does not satisfy a first condition, continue to send the first downlink reference signal in the first cell.

It may be understood that a time sequence of the steps in FIG. 3 is merely a possible example. This is not limited in this embodiment of this application. For example, step 306 may occur at any possible time, and step 306 may be performed provided that the network device determines that the first cell satisfies the sleep condition.

Based on whether the uplink wake-up signal is a periodic signal, this embodiment of this application provides the following two cell sleep methods.

(1) Cell sleep method based on that the uplink wake-up signal is a periodic signal

In the method, when the network device determines that there is no terminal in a connected state in the first cell, and that no uplink wake-up signal whose signal strength exceeds the specified threshold is received on an uplink signal resource within specified duration, it indicates that the first cell satisfies the first condition (or referred to as the sleep condition), and the network device may stop sending the first downlink reference signal in the first cell. The uplink signal resource includes the resource that is used to send the uplink wake-up signal in the first cell and that is indicated by the resource configuration information in the first downlink reference signal.

In other words, because the terminal in the idle/inactive state in the first cell periodically sends the uplink wake-up signal, the network device may measure the uplink wake-up signal. Once no uplink wake-up signal sent by the terminal in the idle/inactive state is received within a period of time, or even if the uplink wake-up signal is received but the signal strength is weak, it may be determined that there is no longer the terminal in the idle/inactive state in the first cell, and the first cell may be put to sleep.

For a problem in the related technology that energy consumption of the network device is high because a network side cannot sense the terminal in the idle/inactive state and needs to keep periodically sending a downlink signal (for example, including synchronization information, system information, and resource configuration information), in the foregoing implementation of this embodiment of this application, the network device may sense the terminal in the idle/inactive state based on the uplink wake-up signal periodically sent by the terminal in the idle/inactive state, to enable the downlink signal to be sent in the cell based on a requirement, so that network energy saving can be implemented.

(2) Cell sleep method based on that the uplink wake-up signal is not a periodic signal

In the method, if receiving, on an uplink signal resource within specified duration, no uplink wake-up signal whose signal strength exceeds the specified threshold, the network device sends the second downlink reference signal in the first cell. The second downlink reference signal is used to trigger a terminal in the idle/inactive state that receives the second downlink reference signal to send an uplink response signal in the first cell. The uplink signal resource includes the resource that is used to send the uplink wake-up signal in the first cell and that is indicated by the resource configuration information included in the first downlink reference signal, and/or a resource used to send the uplink response signal in the first cell.

Correspondingly, when the network device determines that there is no terminal in a connected state in the first cell, and that no uplink response signal whose signal strength exceeds a specified threshold is received on the resource for the uplink response signal within specified duration, it indicates that the first cell satisfies the first condition (namely, the sleep condition), and the network device may stop sending the first downlink reference signal in the first cell.

In other words, a prerequisite of the cell sleep method is that the terminal in the idle/inactive state sends the uplink wake-up signal in the first cell only when the strength of the first downlink reference signal received by the terminal in the idle/inactive state in the first cell is low (which indicates that cell reselection may need to be performed), so that the network device determines, based on the measurement of the uplink wake-up signal, whether to indicate the terminal to perform cell reselection. Because the uplink wake-up signal is not unconditionally and periodically sent, the network device cannot determine, based only on the uplink wake-up signal, whether there is still the terminal in the idle/inactive state in the first cell. To determine whether there is the terminal in the idle/inactive state in the first cell, the network device may send the second downlink reference signal (DL-RS) in the first cell when no uplink signal (including a WUS signal and/or an uplink response signal) with sufficient signal strength is received within a period of time, to trigger the terminal in the idle/inactive state to send a corresponding uplink response signal. In this way, the network device may determine, based on whether an uplink response signal with sufficient signal strength can be received, whether there is still the terminal in the idle/inactive state in the first cell.

If the first cell satisfies the first condition, the network device does not send data or control information in the first cell. Therefore, the network device may turn off a transmit channel, turn off a signal transmitter, or turn off a transmit antenna, to stop sending the first downlink reference signal in the first cell. It may be understood that sending of the first downlink reference signal in the first cell may alternatively be stopped in another manner. This is not limited in this embodiment of this application.

For the problem in the related technology that the energy consumption of the network device is high because the network side cannot sense the terminal in the idle/inactive state and needs to keep periodically sending the downlink signal (for example, including the synchronization information, the system information, and the resource configuration information), in the foregoing implementation of this embodiment of this application, the network device may sense the terminal in the idle/inactive state based on the uplink response signal sent by the terminal in the idle/inactive state, to enable the downlink signal to be sent in the cell based on the requirement, so that network energy saving can be implemented. In addition, because the uplink response signal is not periodically sent, but the network device sends, based on the measurement of the uplink wake-up signal aperiodically sent by the terminal in the idle/inactive state, the second downlink reference signal to trigger the terminal in the idle/inactive state to send the uplink response signal. Therefore, the terminal in the idle/inactive state does not need to periodically send the uplink signal, so that network and terminal energy saving can be further implemented.

In a possible implementation, the network device may send resource configuration information of the second downlink reference signal in the first cell, so that the terminal may receive the second downlink reference signal in the first cell based on the resource configuration information. Optionally, the resource configuration information of the second downlink reference signal may be at the cell level or at the cell group level.

In a possible implementation, the network device may send resource configuration information of the uplink response signal in the first cell, so that the terminal may send the uplink response signal in the first cell based on the resource configuration information. Optionally, the resource configuration information of the uplink response signal may include one or more of the following information: time domain resource indication information of the uplink response signal, frequency domain resource indication information of the uplink response signal, root sequence indication information of the uplink response signal, zero correlation zone indication information of the uplink response signal, and transmit power indication information of the uplink response signal. Optionally, the resource configuration information of the uplink response signal may be at the cell level or at the cell group level.

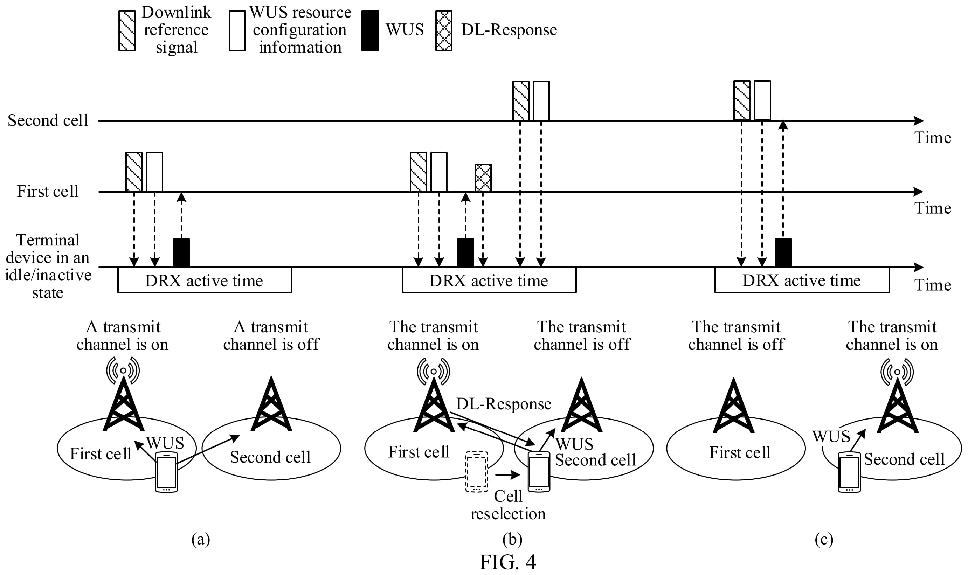

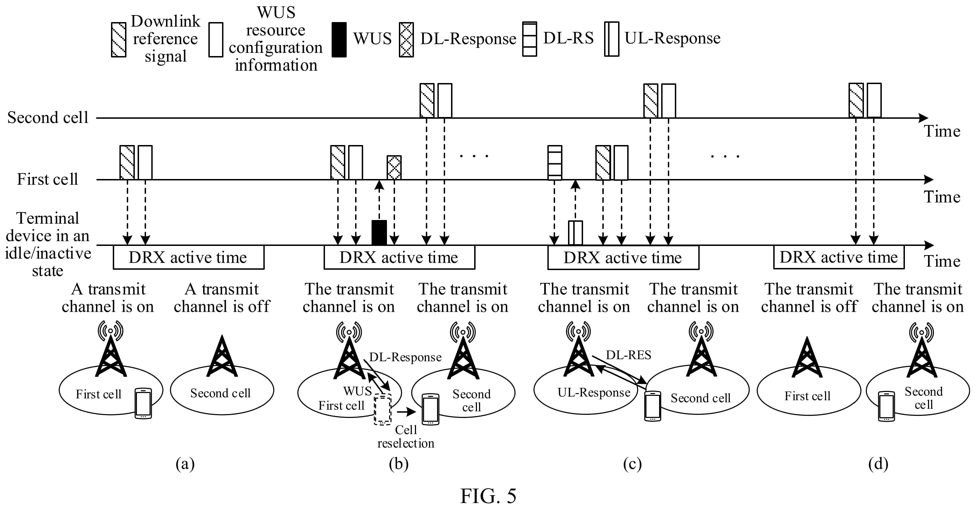

To better understand the foregoing embodiments of this application, the following describes an implementation process of the foregoing embodiments of this application with reference to specific scenarios shown in FIG. 4 and FIG. 5. In the scenarios shown in FIG. 4 and FIG. 5, for clarity, a first downlink reference signal is referred to as a downlink reference signal, an uplink wake-up signal is referred to as a WUS, downlink indication information is referred to as a DL-Response, a second downlink reference signal is referred to as a DL-RS, and an uplink response signal is referred to as a UL-Response. A downlink reference signal includes a synchronization signal (SS) and WUS resource configuration information.

Refer to FIG. 4. In FIG. 4, an implementation process of cell reselection and an implementation process of cell sleep when a terminal in an idle/inactive state periodically sends the WUS are described.

Refer to (a) in FIG. 4. There is currently the terminal in the idle/inactive state in a first cell. For the first cell, a transmit channel is in an on state (Tx On). A network device periodically sends the downlink reference signal (including the SS and the WUS resource configuration information) in the first cell, to support a new terminal in camping on the first cell, and support the new terminal in periodically sending a WUS in the first cell after successfully camping on the first cell. The terminal in the idle/inactive state camping on the first cell receives the downlink reference signal, and periodically sends the WUS in the first cell based on the WUS resource configuration information in the downlink reference signal.

A second cell is currently in a sleep mode. For the second cell, a transmit channel is in an off state (Tx Off).

Refer to (b) in FIG. 4. The network device measures the WUS, and determines, based on a measurement result, that the terminal in the idle/inactive state satisfies a cell reselection condition. Therefore, the network device sends the DL-Response in the first cell, to indicate the terminal in the idle/inactive state to perform cell reselection, and a target cell is the second cell. Because the second cell is currently in the sleep mode, the network device turns on the transmit channel, and starts to periodically send a downlink reference signal in the second cell.

Refer to (c) in FIG. 4. After camping on the second cell, the terminal periodically sends a WUS in the second cell based on WUS resource configuration information in the downlink reference signal received in the second cell, and may further stop sending the WUS in the first cell. For the first cell, the network device determines that there is no terminal in a connected state in the first cell, and that no WUS whose signal strength is greater than a specified threshold is received on a resource indicated by the WUS resource configuration information within specific time. Therefore, the network device determines that there is no terminal in the idle/inactive state in the first cell, turns off the transmit channel of the first cell, and stops sending the downlink reference signal in the first cell.

Refer to FIG. 5. In FIG. 5, an implementation process of cell reselection and an implementation process of cell sleep when a terminal in an idle/inactive state aperiodically sends the WUS are described.

Refer to (a) in FIG. 5. There is currently the terminal in the idle/inactive state in a first cell. For the first cell, a transmit channel is in an on state (Tx On). A network device periodically sends the downlink reference signal in the first cell, to support a new terminal in camping on the first cell, and support the new terminal in periodically sending a WUS in the first cell after successfully camping on the first cell. A second cell is currently in a sleep mode. For the second cell, a transmit channel is in an off state (Tx Off).

Refer to (b) in FIG. 5. The terminal in the idle/inactive state in the first cell receives the downlink reference signal in the first cell, and when signal strength of the downlink reference signal is less than a specified threshold, the terminal sends the WUS in the first cell based on the WUS resource configuration information in the downlink reference signal. The network device measures the WUS, and determines, based on a measurement result, that the terminal in the idle/inactive state satisfies a cell reselection condition (for example, signal strength of the WUS is weak). Therefore, the network device sends the DL-Response in the first cell, to indicate the terminal in the idle/inactive state to perform cell reselection, and a target cell is the second cell. Because the second cell is currently in the sleep mode, the network device turns on the transmit channel, and starts to periodically send a downlink reference signal in the second cell.

Refer to (c) in FIG. 5. If the network device receives, within specified duration, no WUS and/or UL-Response whose signal strength exceeds a specified threshold, the network device sends the DL-RS in the first cell. After receiving the DL-RS, if signal strength of the DL-RS is greater than a specified threshold, the terminal in the idle/inactive state sends the UL-Response in the first cell.

Refer to (d) in FIG. 5. After the terminal camps on the second cell, in the first cell, the network device determines that there is no terminal in a connected state in the first cell, and that no UL-Response whose signal strength is greater than the specified threshold is received within specific time. Therefore, the network device determines that there is no terminal in the idle/inactive state in the first cell. Therefore, the network device turns off the transmit channel of the first cell, stops sending the downlink reference signal in the first cell, and may further stop sending another downlink signal, for example, the DL-RS.

In the scenario shown in FIG. 5, an example in which the network device sends the DL-RS in the first cell after sending the DL-Response in the first cell and determining that a condition for sending the DL-RS in the first cell is satisfied is used for description. It should be understood that, provided that the network device determines that the condition for sending the DL-RS in the first cell is satisfied, the network device may send the DL-RS in the first cell based on configuration information of the DL-RS. Therefore, there is no absolute sequence between a time domain position of the DL-RS and a time domain position of the DL-Response.

In the cell reselection procedure shown in FIG. 1, the terminal in the idle/inactive state performs cell measurement based on the downlink signal and performs cell reselection based on a measurement result. The terminal in the idle/inactive state does not interact with the network device, and the network device cannot sense existence of the terminal in the idle/inactive state. To ensure that a possible terminal in the idle/inactive state can perform cell reselection based on measurement of the downlink signal, the network device needs to periodically send the downlink signal. Consequently, energy consumption of the network device is high.

Therefore, embodiments of this application provide a communication method and a related apparatus and system that can implement the method. The method may be applied to the foregoing energy saving scenario, to implement network energy saving. According to embodiments of this application, the network device can sense the terminal in the idle/inactive state, so that the network device can determine, based on whether there is the terminal in the idle/inactive state, whether transmission of the downlink signal can be disabled, to implement network energy saving.

A communication method provided in another embodiment of this application is described by using an example in which the communication method is performed by a network apparatus and a terminal apparatus. For ease of understanding, in embodiments of this application, an example in which the terminal apparatus is a terminal or a chip, a unit, or a module inside the terminal, and a network apparatus is a network device or a chip, a unit, or a module inside the network device is used for description.

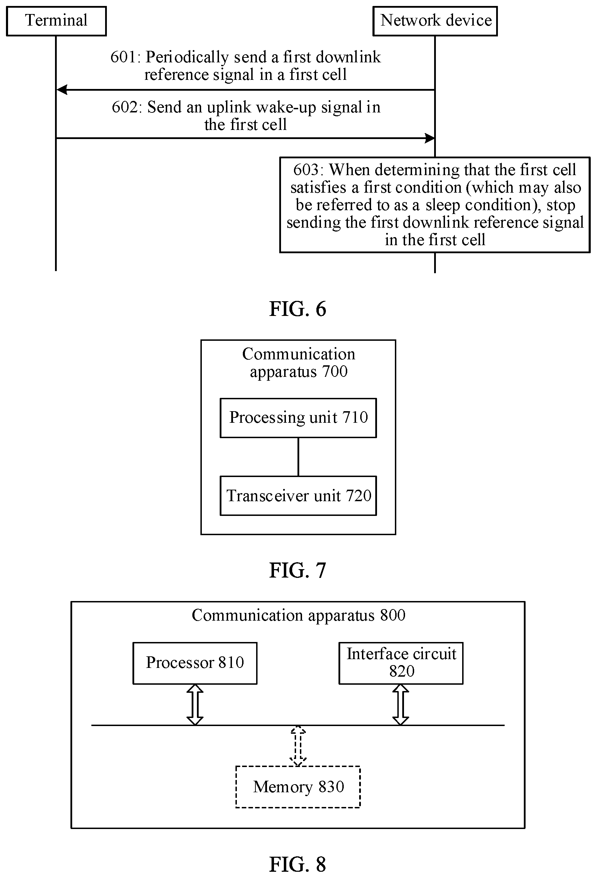

Based on the architecture of the network system shown in FIG. 2 and content described in the foregoing related technologies, FIG. 6 is a schematic flowchart of an example of a communication method according to an embodiment of this application. The solution in FIG. 6 is described by using an example in which a network apparatus interacts with a terminal apparatus. Specifically, the procedure is described by using an example in which the network apparatus is a network device and the terminal apparatus is a terminal. For related descriptions of the network apparatus and the terminal apparatus, refer to the foregoing content. Details are not described again.

Unless otherwise specified, a terminal in the following descriptions is a terminal in an idle/inactive state.

As shown in FIG. 6, the communication method may include the following steps.

Step 601: The network device periodically sends a first downlink reference signal in a first cell.

Step 602: The terminal sends an uplink wake-up signal in the first cell.

In a possible implementation, the uplink wake-up signal is periodically sent.

In another possible implementation, the uplink wake-up signal is sent when a specified condition is satisfied.

Step 603: When determining that the first cell satisfies a first condition, the network device stops sending the first downlink reference signal in the first cell.

In a possible implementation, when the uplink wake-up signal is periodically sent, if the network device determines that there is no terminal in a connected state in the first cell, and that no uplink wake-up signal whose signal strength exceeds a specified threshold is received on an uplink signal resource within specified duration, the network device stops sending the first downlink reference signal in the first cell. The uplink signal resource includes a resource that is used to send the uplink wake-up signal in the first cell and that is indicated by resource configuration information in the first downlink reference signal.

In another possible implementation, the uplink wake-up signal includes an aperiodically sent uplink wake-up signal, and the terminal sends the uplink wake-up signal only when determining that a specified condition is satisfied. For the network device, if receiving, on the uplink signal resource within the specified duration, no uplink signal whose signal strength exceeds the specified threshold, the network device sends a second downlink reference signal in the first cell. The second downlink reference signal is used to trigger a terminal in the idle/inactive state that receives the second downlink reference signal to send an uplink response signal in the first cell. The uplink signal resource includes the resource that is used to send the uplink wake-up signal in the first cell and that is indicated by the resource configuration information in the first downlink reference signal, and/or a resource for the uplink response signal. Correspondingly, if the network device determines that there is no terminal in the connected state in the first cell, and that no uplink response signal whose signal strength exceeds a specified threshold is received on the resource for the uplink response signal within specified duration, the network device stops sending the first downlink reference signal in the first cell.

For a specific implementation of the steps in the method in FIG. 6, refer to the foregoing related content.

It may be understood that, to implement the functions in the foregoing embodiments, the network device and the terminal include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

FIG. 7 and FIG. 8 are diagrams of structures of possible communication apparatuses according to embodiments of this application. These communication apparatuses may be configured to implement functions of the terminal or the network device in the foregoing method embodiments, and therefore can also implement beneficial effects of the foregoing method embodiments. In embodiments of this application, the communication apparatus may be one of the terminals 120a to 120j shown in FIG. 2, may be the base station 110a or 110b shown in FIG. 2, or may be a module (for example, a chip) used in the terminal or the base station.

As shown in FIG. 7, a communication apparatus 700 includes a processing unit 710 and a transceiver unit 720. The communication apparatus 700 is configured to implement a function of the terminal or the network device in the method embodiment shown in FIG. 3 or FIG. 6.

When the communication apparatus 700 is configured to implement the function of the network device in the method embodiment shown in FIG. 3, the transceiver unit 720 receives an uplink wake-up signal in a first cell from the terminal, where the terminal is a terminal in an idle state or an inactive state. The processing unit 710 determines, based on the uplink wake-up signal, whether the terminal satisfies a cell reselection condition; and if determining that the terminal satisfies the cell reselection condition, the processing unit 710 sends downlink indication information in the first cell through the transceiver unit 720, where the downlink indication information indicates the terminal to perform cell reselection.

When the communication apparatus 700 is configured to implement the function of the terminal in the method embodiment shown in FIG. 3, the processing unit 710 is configured to send an uplink wake-up signal in a first cell through the transceiver unit 720, where the uplink wake-up signal is used by the network device to determine whether the terminal satisfies a cell reselection condition, the terminal is a terminal that sends the uplink wake-up signal, and the terminal is a terminal in an idle state or an inactive state. The transceiver unit 720 is configured to receive downlink indication information in the first cell, where the downlink indication information indicates the terminal to perform cell reselection. The processing unit 710 is configured to perform cell reselection or cell reselection decision based on the downlink indication information.

When the communication apparatus 700 is configured to implement the function of the network device in the method embodiment shown in FIG. 6, the processing unit 710 is configured to send a first downlink reference signal in a first cell through the transceiver unit 720, where the first downlink reference signal includes resource configuration information and an initial access signal block, the resource configuration information indicates a resource used by the terminal to send an uplink wake-up signal in the first cell, the initial access signal block includes a synchronization signal, and the first downlink reference signal is periodically sent. The transceiver unit 720 is configured to receive the uplink wake-up signal in the first cell from the terminal, where the terminal is a terminal in an idle state or an inactive state. The processing unit 710 is configured to: when determining that the first cell satisfies a first condition, stop sending the first downlink reference signal in the first cell.

For more detailed descriptions of the processing unit 710 and the transceiver unit 720, directly refer to related descriptions in the method embodiment shown in FIG. 3 or FIG. 6. Details are not described herein again.

As shown in FIG. 8, a communication apparatus 800 includes a processor 810 and an interface circuit 820. The processor 810 and the interface circuit 820 are coupled to each other. It may be understood that the interface circuit 820 may be a transceiver or an input/output interface. Optionally, the communication apparatus 800 may further include a memory 830, configured to: store instructions executed by the processor 810, store input data needed by the processor 810 to run the instructions, or store data generated after the processor 810 runs the instructions.

When the communication apparatus 800 is configured to implement the method shown in FIG. 3 or FIG. 6, the processor 810 is configured to implement a function of the processing unit 710, and the interface circuit 820 is configured to implement a function of the transceiver unit 720.

When the communication apparatus is a chip used in a terminal, the chip in the terminal implements functions of the terminal in the foregoing method embodiments. The chip in the terminal receives information from another module (for example, a radio frequency module or an antenna) in the terminal, where the information is sent by a network device to the terminal. Alternatively, the chip in the terminal sends information to another module (for example, a radio frequency module or an antenna) in the terminal, where the information is sent by the terminal to a network device.

When the communication apparatus is a module used in a network device, the module in the network device implements functions of the network device in the foregoing method embodiments. The module in the network device receives information from another module (for example, a radio frequency module or an antenna) in the network device, where the information is sent by a terminal to the network device. Alternatively, the module in the network device sends information to another module (for example, a radio frequency module or an antenna) in the network device, where the information is sent by the network device to a terminal. The module in the network device herein may be a baseband chip of the network device, or may be a DU or another module. The DU herein may be a DU in an open radio access network (open radio access network, O-RAN) architecture.

It may be understood that the processor in this embodiment of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

In this application, another example of a communication apparatus is provided. The communication apparatus includes at least one processor and at least one memory. The at least one processor is coupled to the at least one memory. The at least one memory is configured to store instructions. When the instructions are executed by the at least one processor, the communication apparatus is caused to perform the methods in the foregoing embodiments. For example, the communication apparatus includes one processor and one memory. As shown in FIG. 8, the communication apparatus 800 includes one processor 810 and one memory 830. The processor 810 is coupled to the memory 830. The memory 830 stores instructions. When the instructions stored in the memory 830 are executed by the processor 810, the communication apparatus 800 performs the methods performed by the terminal or the network device in the foregoing embodiments.

The method steps in embodiments of this application may be implemented in hardware, or may be implemented in software instructions that can be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. The storage medium may alternatively be a component of the processor. The processor and the storage medium may be located in an ASIC. In addition, the ASIC may be located in the network device or the terminal. Alternatively, the processor and the storage medium may alternatively exist in the network device or the terminal as discrete components.

All or a part of the foregoing embodiments may be implemented by software, hardware, firmware, or any combination thereof. When software is used to implement embodiments, all or a part of embodiments may be implemented in a form of a computer program product. The computer program product includes one or more computer programs or instructions. When the computer program or the instructions are loaded and executed on a computer, all or a part of the procedures or functions in embodiments of this application are performed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may indicate: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean execution sequences, and the execution sequences of the processes should be determined based on functions and internal logic of the processes.

**Claims**

1. A communication method, comprising:

   receiving an uplink wake-up signal in a first cell from a terminal, wherein the terminal is a terminal in an idle state or an inactive state;
   determining, based on the uplink wake-up signal, whether the terminal satisfies a cell reselection condition; and
   if determining that the terminal satisfies the cell reselection condition, sending downlink indication information in the first cell, wherein the downlink indication information indicates the terminal to perform cell reselection.

2. The method according to claim 1, further comprising: before the receiving the uplink wake-up signal in the first cell, sending a first downlink reference signal in the first cell, wherein the first downlink reference signal comprises resource configuration information, and the first downlink reference signal is periodically sent.

3. The method according to claim 2, wherein the resource configuration information comprises first configuration information, the first configuration information indicates a first resource, and the first resource is a resource used to send the uplink wake-up signal in the first cell; or
   the resource configuration information comprises first configuration information, the first configuration information indicates a first resource, the first resource is a resource used to send an uplink wake-up signal in a cell in a first cell group, and the first cell group comprises the first cell.

4. The method according to claim 3, wherein the resource configuration information comprises M pieces of configuration information, the M pieces of configuration information comprise the first configuration information and second configuration information, the first configuration information indicates the first resource, the first resource is the resource used to send the uplink wake-up signal in the cell in the first cell group, the second configuration information indicates a second resource, and the second resource is a resource used to send an uplink wake-up signal in a second cell.

5. The method according to any one of claims 2 to 4, wherein the resource configuration information comprises N pieces of candidate configuration information, the N pieces of candidate configuration information indicate N candidate resources used to send the uplink wake-up signal in the first cell, the N pieces of candidate configuration information are associated with K terminal identifiers, and both N and K are integers greater than or equal to 1; and
   after the receiving the uplink wake-up signal in the first cell from the terminal, the method further comprises:

   determining the first configuration information corresponding to the resource of the uplink wake-up signal, wherein the first configuration information is one of the N pieces of candidate configuration information; and
   determining, based on a terminal identifier associated with the first configuration information, the terminal that sends the uplink wake-up signal.

6. The method according to any one of claims 2 to 5, wherein the resource configuration information comprises one or more of the following information:

   a sending periodicity of the uplink wake-up signal, a time domain offset of the uplink wake-up signal, a time domain symbol absolute position of the uplink wake-up signal, a frequency domain offset of the uplink wake-up signal, a frequency domain carrier absolute position of the uplink wake-up signal, a root sequence of the uplink wake-up signal, a zero correlation zone of a sequence of the uplink wake-up signal, target received strength of the uplink wake-up signal, a maximum quantity of power ramping times of the uplink wake-up signal, and a power ramping step of the uplink wake-up signal, wherein the time domain offset indicates an offset of the uplink wake-up signal in time domain relative to the first downlink reference signal in time domain, and the frequency domain offset indicates an offset of the uplink wake-up signal in frequency domain relative to the first downlink reference signal in frequency domain.

7. The method according to any one of claims 2 to 6, wherein the first downlink reference signal further comprises an initial access signal block, or comprises the initial access signal block and system information, wherein the initial access signal block comprises one or more of the following information: a synchronization signal, a synchronization signal block SSB, and a part of information in the synchronization signal or a master information block MIB.

8. The method according to any one of claims 2 to 7, further comprising:
determining that there is no terminal in a connected state in the first cell, and that no uplink wake-up signal whose signal strength exceeds a specified threshold is received on an uplink signal resource within specified duration, and stopping sending the first downlink reference signal in the first cell, wherein the uplink signal resource comprises the resource that is indicated by the resource configuration information and that is used to send the uplink wake-up signal in the first cell.

9. The method according to any one of claims 2 to 8, further comprising:

if receiving, on the uplink signal resource within the specified duration, no uplink signal whose signal strength exceeds the specified threshold, sending a second downlink reference signal in the first cell, wherein the second downlink reference signal is used to trigger a terminal in the idle state and a terminal in the inactive state that receive the second downlink reference signal to send uplink response signals in the first cell, wherein the uplink signal resource comprises the resource that is indicated by the resource configuration information and that is used to send the uplink wake-up signal in the first cell, and/or a resource used to send the uplink response signal in the first cell; and
the determining that the first cell satisfies a first condition comprises:
determining that there is no terminal in the connected state in the first cell, and that no uplink response signal whose signal strength exceeds a specified threshold is received on the resource for the uplink response signal within specified duration.

10. The method according to any one of claims 1 to 9, wherein the downlink indication information comprises first information, the first information indicates a format of the first configuration information, the first configuration information indicates the first resource, the first resource is the resource used to send the uplink wake-up signal in the first cell, and the first configuration information is associated with at least one terminal identifier.

11. The method according to claim 10, wherein the downlink indication information further comprises third information, and the third information indicates a target cell.

12. The method according to claim 11, wherein the third information indicates one or more of the following information:

a cell identifier of the target cell;
downlink signal resource configuration information, indicating a resource used to send a downlink reference signal in the target cell, wherein the downlink reference signal comprises resource configuration information, the resource configuration information indicates a resource used to send an uplink wake-up signal in the target cell, and the downlink reference signal is periodically sent; and
uplink signal resource configuration information, indicating the resource used to send the uplink wake-up signal in the target cell, wherein the uplink wake-up signal is used by a network device to determine whether the terminal satisfies a cell reselection condition after camping on the target cell.

13. The method according to claim 12, further comprising:

if periodic sending of the downlink reference signal has been stopped in the target cell, and the target cell is a cell served by the network device, restarting to periodically send the downlink reference signal in the target cell; or
if periodic sending of the downlink reference signal has been stopped in the target cell, and the target cell is a cell served by another network device, indicating the another network device to restart to periodically send the downlink reference signal in the target cell.

14. The method according to any one of claims 1 to 13, further comprising:

receiving, in the second cell, the uplink wake-up signal from the terminal; and
the determining, based on the uplink wake-up signal, whether the terminal satisfies the cell reselection condition comprises:
determining, based on signal strength of the uplink wake-up signal received in the first cell and signal strength of the uplink signal received in the second cell, whether the terminal satisfies the cell reselection condition.

15. A communication method, wherein the method comprises:

sending an uplink wake-up signal in a first cell, wherein the uplink wake-up signal is used by a network device to determine whether a terminal satisfies a cell reselection condition, the terminal is a terminal that sends the uplink wake-up signal, and the terminal is a terminal in an idle state or an inactive state;

receiving downlink indication information in the first cell, wherein the downlink indication information indicates the terminal to perform cell reselection; and

performing cell reselection or cell reselection decision based on the downlink indication information.

16. The method according to claim 15, wherein before the sending the uplink wake-up signal in the first cell, the method further comprises:

receiving a first downlink reference signal in the first cell, wherein the first downlink reference signal comprises resource configuration information, and the first downlink reference signal is periodically sent; and

the sending the uplink wake-up signal in the first cell comprises:

sending the uplink wake-up signal in the first cell based on the resource configuration information.

17. The method according to claim 16, wherein the resource configuration information comprises first configuration information, the first configuration information indicates a first resource, and the first resource is a resource used to send the uplink wake-up signal in the first cell; or

the resource configuration information comprises first configuration information, the first configuration information indicates a first resource, the first resource is a resource used to send uplink wake-up in a cell in a first cell group, and the first cell group comprises the first cell.

18. The method according to claim 16, wherein the resource configuration information comprises M pieces of configuration information, the M pieces of configuration information comprise first configuration information and second configuration information, the first configuration information indicates a first resource, the first resource is a resource used to send an uplink wake-up signal in a cell in a first cell group, the second configuration information indicates a second resource, and the second resource is a resource used to send an uplink wake-up signal in a second cell;

the sending the uplink wake-up signal in the first cell comprises:

sending the uplink wake-up signal in the first cell based on the first configuration information; and the method further comprises:

sending the uplink wake-up signal in the second cell based on the second configuration information.

19. The method according to any one of claims 16 to 18, wherein the resource configuration information comprises N pieces of candidate configuration information, the N pieces of candidate configuration information indicate N candidate resources used to send the uplink wake-up signal in the first cell, the N pieces of candidate configuration information are associated with K terminal identifiers, and both N and K are integers greater than or equal to 1; and

the sending the uplink wake-up signal in the first cell comprises:

determining, based on an identifier of the terminal, the first configuration information that is in the N pieces of candidate configuration information and that is associated with the identifier of the terminal; and

sending the uplink wake-up signal in the first cell based on the first configuration information.

20. The method according to any one of claims 16 to 19, wherein the resource configuration information comprises one or more of the following information:

a sending periodicity of the uplink wake-up signal, a time domain offset of the uplink wake-up signal, a time domain symbol absolute position of the uplink wake-up signal, a frequency domain offset of the uplink wake-up signal, a frequency domain carrier absolute position of the uplink wake-up signal, a root sequence of the uplink wake-up signal, a zero correlation zone of a sequence of the uplink wake-up signal, target received strength of the uplink wake-up signal, a maximum quantity of power ramping times of the uplink wake-up signal, and a power ramping step of the uplink wake-up signal, wherein the time domain offset indicates an offset of the uplink wake-up signal in time domain relative to the first downlink reference signal in time domain, and the frequency domain offset indicates an offset of the uplink wake-up signal in frequency domain relative to the first downlink reference signal in frequency domain.

21. The method according to any one of claims 16 to 20, wherein the first downlink reference signal further comprises an initial access signal block, or comprises the initial access signal block and system information, wherein the initial access signal block comprises one or more of the following information: a synchronization signal, a synchronization signal block SSB, and a part of information in the synchronization signal or a master information block MIB.

22. The method according to any one of claims 16 to 21, wherein the downlink indication information comprises first information, the first information indicates a format of the first configuration information, the first configuration information indicates the first resource, the first resource is the resource used to send the uplink wake-up signal in the first cell, and the first configuration information is associated with at least one terminal identifier; and

> the performing cell reselection or cell reselection decision based on the downlink indication information comprises:
> determining, based on the format that is of the first configuration information and that is indicated by the first information, a terminal identifier associated with the format; and
> if the terminal identifier associated with the format comprises the identifier of the terminal, performing cell reselection or cell reselection decision.

23. The method according to claim 22, wherein the downlink indication information further comprises third information, and the third information indicates a target cell; and

> the performing cell reselection or cell reselection decision based on the downlink indication information comprises:
> camping on the target cell based on the target cell indicated by the third information; or
> performing measurement of the first cell and the target cell to obtain measurement results, and camping on the first cell or the target cell based on the measurement results.

24. The method according to claim 23, wherein the third information indicates one or more of the following information:

> downlink signal resource configuration information, indicating a resource used to send a downlink reference signal in the target cell, wherein the downlink reference signal comprises resource configuration information, the resource configuration information indicates a resource used to send an uplink wake-up signal in the target cell, and the downlink reference signal is periodically sent; and
uplink signal resource configuration information, indicating the resource used to send the uplink wake-up signal in the target cell, wherein the uplink wake-up signal is used by the network device to determine whether the terminal satisfies a cell reselection condition after camping on the target cell.

25. The method according to any one of claims 15 to 24, wherein the sending the uplink wake-up signal in the first cell comprises:
periodically sending the uplink wake-up signal in the first cell.

26. The method according to any one of claims 15 to 24, further comprising:

> receiving the first downlink reference signal in the first cell, wherein the first downlink reference signal comprises the resource configuration information, the resource configuration information indicates the resource of the uplink wake-up signal, and the first downlink reference signal is periodically sent; and
> the sending the uplink wake-up signal in the first cell comprises:
> when determining that signal strength of the first downlink reference signal does not satisfy a specified requirement, sending the uplink wake-up signal in the first cell.

27. The method according to claim 26, further comprising:

> receiving a second downlink reference signal in the first cell, wherein the second downlink reference signal is sent when the network device receives, on an uplink signal resource within specified duration, no uplink signal whose signal strength exceeds a specified threshold, and the uplink signal resource comprises the resource that is indicated by the resource configuration information and that is used to send the uplink wake-up signal in the first cell, and/or a resource used to send the uplink response signal in the first cell; and
> if signal strength of the second downlink reference signal is greater than a specified threshold, sending the uplink response signal in the first cell, wherein the uplink response signal is used to determine whether the first cell satisfies a condition for stopping sending the first downlink reference signal in the first cell.

28. A communication method, comprising:

sending a first downlink reference signal in a first cell, wherein the first downlink reference signal comprises resource configuration information and an initial access signal block, the resource configuration information indicates a resource used by a terminal to send an uplink wake-up signal in the first cell, the initial access signal block comprises a synchronization signal, and the first downlink reference signal is periodically sent;

receiving the uplink wake-up signal in the first cell from the terminal, wherein the terminal is a terminal in an idle state or an inactive state; and when determining that the first cell satisfies a first condition, stopping sending the first downlink reference signal in the first cell.

29. The method according to claim 28, wherein the uplink wake-up signal is periodically sent; and

the determining that the first cell satisfies the first condition comprises:
determining that there is no terminal in a connected state in the first cell, and that no uplink wake-up signal whose signal strength exceeds a specified threshold is received on an uplink signal resource within specified duration, wherein the uplink signal resource comprises the resource that is indicated by the resource configuration information and that is used to send the uplink wake-up signal in the first cell.

30. The method according to claim 29, wherein the uplink wake-up signal is aperiodically sent; the method further comprises:

if receiving, on the uplink signal resource within the specified duration, no uplink signal whose signal strength exceeds the specified threshold, sending a second downlink reference signal in the first cell, wherein the second downlink reference signal is used to trigger a terminal in the idle state and a terminal in the inactive state that receive the second downlink reference signal to send uplink response signals in the first cell, wherein the uplink signal resource comprises the resource that is indicated by the resource configuration information and that is used to send the uplink wake-up signal in the first cell, and/or a resource used to send the uplink response signal in the first cell; and
the determining that the first cell satisfies the first condition comprises:
determining that there is no terminal in the connected state in the first cell, and that no uplink response signal whose signal strength exceeds a specified threshold is received on the resource for the uplink response signal within specified duration.

31. A communication apparatus, comprising a unit or module configured to perform the method according to any one of claims 1 to 14, comprising a unit or module configured to perform the method according to any one of claims 15 to 27, or comprising a unit or module configured to perform the method according to any one of claims 28 to 30.

32. A communication apparatus, comprising one or more processors configured to perform the method according to any one of claims 1 to 14, perform the method according to any one of claims 15 to 27, or perform the method according to any one of claims 28 to 30.

33. A computer-readable storage medium, wherein the computer-readable storage medium stores a computer program or instructions, and when the computer program or the instructions are executed by a communication apparatus, the method according to any one of claims 1 to 14 is implemented, the method according to any one of claims 15 to 27 is implemented, or the method according to any one of claims 28 to 30 is implemented.

34. A computer program product, wherein when the computer program product is invoked by a computer, the computer is caused to perform the method according to any one of claims 1 to 14, perform the method according to any one of claims 15 to 27, or perform the method according to any one of claims 28 to 30.

35. A chip system, comprising: a memory, configured to store a computer program; and a processor, wherein after the processor invokes the computer program from the memory and runs the computer program, a communication apparatus on which the chip system is installed is caused to perform the method according to any one of claims 1 to 14, perform the method according to any one of claims 15 to 27, or perform the method according to any one of claims 28 to 30.

FIG. 1

FIG. 2

Terminal

Network
device

301: Send a first downlink reference
signal in a first cell

302: Send an uplink wake-up signal in the first cell

303: Determine, based on the uplink
wake-up signal, whether the terminal
satisfies a cell reselection condition

304: Send downlink indication information in the first cell,
to indicate to perform cell reselection

305: Perform cell
reselection or cell
reselection decision
based on the downlink
indication information

306: When determining that the first cell
satisfies a first condition (which may also
be referred to as a sleep condition), stop
sending the first downlink reference
signal in the first cell

FIG. 3

FIG. 4

FIG. 5

| Terminal | | Network device |
|---|---|---|

601: Periodically send a first downlink reference signal in a first cell

602: Send an uplink wake-up signal in the first cell

603: When determining that the first cell satisfies a first condition (which may also be referred to as a sleep condition), stop sending the first downlink reference signal in the first cell

**FIG. 6**

Communication apparatus 700

Processing unit 710

Transceiver unit 720

**FIG. 7**

Communication apparatus 800

Processor 810

Interface circuit 820

Memory 830

**FIG. 8**

## INTERNATIONAL SEARCH REPORT

| International application No. |
| --- |
| **PCT/CN2024/118553** |

| A. | CLASSIFICATION OF SUBJECT MATTER |
| --- | --- |
| | H04W 36/00(2009.01)i |

According to International Patent Classification (IPC) or to both national classification and IPC

| B. | FIELDS SEARCHED |
| --- | --- |

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

WPABSC; CNTXT; WOTXT; EPTXT; USTXT: 切换, 重选, 自动, 上报, 唤醒, 空闲, 非激活, 非活动, 周期, 条件, handover, reselect, automatic, reporting, wake, idle, inactive, periodic, conditional

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 116033542 A (DATANG MOBILE COMMUNICATIONS EQUIPMENT CO., LTD.) 28 April 2023 (2023-04-28) claims 1-40 | 1-35 |
| A | CN 106961728 A (CHINA MOBILE COMMUNICATIONS CORP.) 18 July 2017 (2017-07-18) entire document | 1-35 |
| A | CN 110831123 A (TELECOMMUNICATIONS TECHNOLOGY RESEARCH INSTITUTE CO., LTD.) 21 February 2020 (2020-02-21) entire document | 1-35 |
| A | CN 114667780 A (HUAWEI TECHNOLOGIES CO., LTD.) 24 June 2022 (2022-06-24) entire document | 1-35 |
| A | CN 114828167 A (DATANG MOBILE COMMUNICATIONS EQUIPMENT CO., LTD.) 29 July 2022 (2022-07-29) entire document | 1-35 |

☑ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **30 December 2024** | **31 December 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/118553**

| | C. DOCUMENTS CONSIDERED TO BE RELEVANT | | |
|---|---|---|---|
| Category* | Citation of document, with indication, where appropriate, of the relevant passages | | Relevant to claim No. |
| A | CN 115499929 A (SPREADTRUM COMMUNICATIONS (SHANGHAI) CO., LTD.) 20 December 2022 (2022-12-20) entire document | | 1-35 |
| A | CN 115843018 A (HUAWEI TECHNOLOGIES CO., LTD.) 24 March 2023 (2023-03-24) entire document | | 1-35 |
| A | CN 115942436 A (HUAWEI TECHNOLOGIES CO., LTD.) 07 April 2023 (2023-04-07) entire document | | 1-35 |

Form PCT/ISA/210 (second sheet) (July 2022)

**INTERNATIONAL SEARCH REPORT**
Information on patent family members

| International application No. |
| --- |
| **PCT/CN2024/118553** |

| Patent document cited in search report | | | Publication date (day/month/year) | Patent family member(s) | | | Publication date (day/month/year) |
| --- | --- | --- | --- | --- | --- | --- | --- |
| CN | 116033542 | A | 28 April 2023 | None | | | |
| CN | 106961728 | A | 18 July 2017 | EP | 3404956 | A1 | 21 November 2018 |
| | | | | EP | 3404956 | A4 | 04 September 2019 |
| | | | | EP | 3404956 | B1 | 14 October 2020 |
| | | | | US | 2019053086 | A1 | 14 February 2019 |
| | | | | US | 10681582 | B2 | 09 June 2020 |
| | | | | WO | 2017121221 | A1 | 20 July 2017 |
| CN | 110831123 | A | 21 February 2020 | JP | 2023053265 | A | 12 April 2023 |
| | | | | JP | 7524379 | B2 | 29 July 2024 |
| | | | | US | 2021368444 | A1 | 25 November 2021 |
| | | | | US | 11991632 | B2 | 21 May 2024 |
| | | | | TW | 202010336 | A | 01 March 2020 |
| | | | | TWI | 731378 | B | 21 June 2021 |
| | | | | KR | 20220119192 | A | 26 August 2022 |
| | | | | KR | 102633010 | B1 | 01 February 2024 |
| | | | | EP | 3836634 | A1 | 16 June 2021 |
| | | | | EP | 3836634 | A4 | 13 October 2021 |
| | | | | EP | 3836634 | B1 | 04 October 2023 |
| | | | | JP | 2021533699 | A | 02 December 2021 |
| | | | | JP | 7443334 | B2 | 05 March 2024 |
| | | | | KR | 20210040143 | A | 12 April 2021 |
| | | | | KR | 102435028 | B1 | 19 August 2022 |
| | | | | WO | 2020029738 | A1 | 13 February 2020 |
| CN | 114667780 | A | 24 June 2022 | None | | | |
| CN | 114828167 | A | 29 July 2022 | None | | | |
| CN | 115499929 | A | 20 December 2022 | None | | | |
| CN | 115843018 | A | 24 March 2023 | None | | | |
| CN | 115942436 | A | 07 April 2023 | None | | | |

Form PCT/ISA/210 (patent family annex) (July 2022)

**REFERENCES CITED IN THE DESCRIPTION**

**Patent documents cited in the description**

- CN 202311249104